(19) Europäisches Patentamt
European Patent Office
Office européen des brevets

(11) **EP 4 607 245 A1**

(12) **EUROPEAN PATENT APPLICATION**
published in accordance with Art. 153(4) EPC

(43) Date of publication:
27.08.2025 Bulletin 2025/35

(21) Application number: 22963121.3

(22) Date of filing: 28.10.2022

(51) International Patent Classification (IPC):
*G01S 19/14* (2010.01)

(52) Cooperative Patent Classification (CPC):
G06T 17/00; G01S 19/14; G06T 15/04; G06T 15/20

(86) International application number:
PCT/CN2022/128133

(87) International publication number:
WO 2024/087137 (02.05.2024 Gazette 2024/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Huawei Technologies Co., Ltd.
Shenzhen, Guangdong 518129 (CN)

(72) Inventors:
• HUANG, Jingwei
Shenzhen, Guangdong 518129 (CN)
• GUO, Xiaoyang
Shenzhen, Guangdong 518129 (CN)

• ZHOU, Caifa
Shenzhen, Guangdong 518129 (CN)
• LI, Weiyang
Shenzhen, Guangdong 518129 (CN)
• SHI, Beiji
Shenzhen, Guangdong 518129 (CN)
• LI, Siyu
Shenzhen, Guangdong 518129 (CN)
• ZHANG, Yanfeng
Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) **RENDERING METHOD, AND RELATED APPARATUS**

(57)     A rendering method is used to render a three-dimensional model. **In** this method, a spherical harmonic function of each voxel in a three-dimensional model is solved based on a color of a pixel in a plurality of images from different viewpoints, to use the spherical harmonic function to represent a color of each voxel from different viewpoints. **In** addition, with reference to a color of a pixel in the plurality of images, color representation effect of three-dimensional models before and after deletion of each voxel is compared, to determine whether the voxel needs to be deleted (in other words, whether an opacity of the voxel is 0), and further obtain an opacity of each voxel in the three-dimensional model. Finally, a three-dimensional model is rendered based on an opacity of each voxel in the three-dimensional model and a color of each voxel from different viewpoints. **In** this method, a color of a three-dimensional model from each viewpoint can be represented by using a small quantity of parameters. **In** addition, a process of solving a color and an opacity of a voxel is simple, and iterative training is not required, thereby effectively improving efficiency in rendering a three-dimensional model.

```
Obtain a first three-dimensional model, where the first three-dimensional model     401
includes a plurality of voxels, and the first three-dimensional model is constructed
based on a plurality of images from different viewpoints

                                    ↓

Determine, based on a color of a pixel that is in a plurality of images and that     402
corresponds to each of the plurality of voxels, a spherical harmonic function
corresponding to each voxel, where the spherical harmonic function indicates a color
of each voxel from different viewpoints

                                    ↓

Delete a first target voxel from the first three-dimensional model based on the
spherical harmonic function corresponding to each voxel, to obtain a second three-
dimensional model, where a first difference value corresponding to the first target     403
voxel is greater than a second difference value, the first difference value indicates a
difference between a color indicated by a spherical harmonic function corresponding
to the first target voxel and a color of a target pixel, the target pixel is a pixel that is in
the plurality of images and that corresponds to the first target voxel, the second
difference value indicates a difference between a color indicated by a spherical
harmonic function corresponding to a background voxel and the color of the target
pixel, and the background voxel is a voxel that is in the second three-dimensional
model and that corresponds to the target pixel

                                    ↓

Render the second three-dimensional model based on a spherical harmonic function     404
corresponding to each voxel in the second three-dimensional model
```

FIG. 4

**Description**

## TECHNICAL FIELD

This application relates to the field of computer technologies, and in particular, to a rendering method and a related apparatus.

## BACKGROUND

Digital cities represent a development direction of city informatization and are an important means to promote informatization of the entire society. Currently, the digital cities have been developed rapidly and have become one of most promising high-tech fields at present. In various application systems of the digital cities, three-dimensional models of cities are gradually replacing two-dimensional city maps as a fundamental form of geospatial information representation in many fields such as city planning, city management, public safety, heritage protection, traffic navigation, tourism and vacation, military defense, and film and television entertainment.

Constructing a three-dimensional model of a city based on a satellite mapping system is currently a mainstream model construction method. In the satellite mapping system, satellite images from different viewpoints are obtained mainly by performing oblique imaging on an area of the city a plurality of times by using a high-resolution optical satellite, and the three-dimensional model is constructed based on shot satellite images. In a process of constructing the three-dimensional model, there is a need to determine a color and an opacity of any element, in the three-dimensional model, observed in any direction, to render the three-dimensional model from different viewpoints.

In a related technology, a neural network model is mainly used to solve a color and an opacity of each element in the three-dimensional model in different observation directions. However, the neural network model usually includes a large quantity of network parameters, and the neural network model needs to be trained iteratively. Consequently, training and inference of the neural network model is time-consuming, resulting in low efficiency in rendering the three-dimensional model.

## SUMMARY

Embodiments of this application provide a rendering method. A color of a three-dimensional model from each viewpoint can be represented by using a small quantity of parameters. In addition, a process of solving a color and an opacity of a voxel is simple, and iterative training is not required, thereby effectively improving efficiency in rendering a three-dimensional model.

A first aspect of this application provides a rendering method, used to render a three-dimensional model. The rendering method includes: First, a first three-dimensional model is obtained, where the first three-dimensional model includes a plurality of voxels, and the first three-dimensional model is constructed based on a plurality of images from different viewpoints. A voxel in the first three-dimensional model may be considered as a smallest unit forming the first three-dimensional model. The voxels are, for example, cubes of a same size. The first three-dimensional model can be obtained by stacking the plurality of cubes. The plurality of images from different viewpoints are a plurality of images captured of a same scene object from different viewpoints. The first three-dimensional model may represent a shape of a scene object in the plurality of images from different viewpoints.

Then, a spherical harmonic function corresponding to each voxel is determined based on a color of a pixel that is in a plurality of images and that corresponds to each of the plurality of voxels, where the spherical harmonic function indicates a color of each voxel from different viewpoints. For any voxel in the first three-dimensional model, a color of a pixel that is in each image and that corresponds to the voxel may be considered as a color of the voxel from a viewpoint for the image. In this way, a color of each voxel from different viewpoints can be obtained by determining the color of the pixel that is in the plurality of images and that corresponds to each voxel, and further, the spherical harmonic function corresponding to each voxel can be obtained.

Next, a first target voxel is deleted from the first three-dimensional model based on the spherical harmonic function corresponding to each voxel, to obtain a second three-dimensional model, where a first difference value corresponding to the first target voxel is greater than a second difference value, the first difference value indicates a difference between a color indicated by a spherical harmonic function corresponding to the first target voxel and a color of a target pixel, the target pixel is a pixel that is in the plurality of images and that corresponds to the first target voxel, the second difference value indicates a difference between a color indicated by a spherical harmonic function corresponding to a background voxel and the color of the target pixel, and the background voxel is a voxel that is in the second three-dimensional model and that corresponds to the target pixel.

Put simply, the first target voxel in the first three-dimensional model corresponds to the target pixel in the plurality of images, and after the first target voxel is deleted, a voxel corresponding to the target pixel becomes a second target voxel. Color representation effect of the three-dimensional model before deletion of the first target voxel may be determined by obtaining the first difference value between the color indicated by the spherical harmonic function corresponding to the first target voxel and the color of the target pixel. Color representation effect of the three-dimensional model after deletion of the first target voxel may be determined by obtaining the second difference value between the color indicated by the spherical harmonic function corresponding to the second target voxel and the color of the target pixel. If the first difference value corresponding to the first target voxel is greater than the second difference value corresponding to the second target voxel, it indicates that the color representation effect of the three-dimensional model before deletion of the first target voxel is poorer than the color representation effect of the three-dimensional model after deletion of the first target voxel. In other words, existence of the first target voxel causes deterioration of the color representation effect of the three-dimensional model. In this case, it may be determined that an opacity of the first target voxel in the first three-dimensional model is 0, and further, the first target voxel is deleted.

Finally, the second three-dimensional model is rendered based on a spherical harmonic function corresponding to each voxel in the second three-dimensional model.

In this solution, a spherical harmonic function is used to represent a color of each voxel, and color representation effect of three-dimensional models before and after deletion of each voxel is compared to determine an opacity of the voxel. In this way, a color of a three-dimensional model from each viewpoint can be represented by using a small quantity of parameters, which avoids using a large quantity of complex parameters in a neural network and can effectively save storage space. In addition, a process of solving a color and an opacity of a voxel is simple, and iterative training is not required, thereby effectively improving efficiency in rendering a three-dimensional model.

In a possible implementation, before the second three-dimensional model is rendered, a spherical harmonic function corresponding to the second target voxel is updated based on a color of a pixel that is in the plurality of images and that corresponds to the second target voxel in the second three-dimensional model, where a pixel that is in the plurality of images and that corresponds to the second target voxel changes after the first target voxel is deleted.

In this solution, after a new three-dimensional model is obtained by deleting a voxel, a voxel that is in the three-dimensional model and that corresponds to a changed pixel in a plurality of images is determined, and a spherical harmonic function of the voxel is updated based on a color of the pixel that is in the plurality of images and that corresponds to the voxel, so that a spherical harmonic function of the voxel can better reflect a color of the voxel, to ensure rendering effect of the three-dimensional model.

In a possible implementation, the method further includes: A third three-dimensional model is generated based on the second three-dimensional model, where the third three-dimensional model includes a plurality of voxels, each voxel in the third three-dimensional model is obtained from N voxels in the second three-dimensional model, and N is an integer greater than 1. In other words, a volume of a voxel in the third three-dimensional model is larger than a volume of a voxel in the second three-dimensional model, and a quantity of voxels in the third three-dimensional model is less than a quantity of voxels in the second three-dimensional model.

Then, a spherical harmonic function corresponding to each voxel in the third three-dimensional model is determined based on spherical harmonic functions of the N voxels that are in the second three-dimensional model and that correspond to each voxel in the third three-dimensional model. For example, assuming that a voxel A in the third three-dimensional model corresponds to a voxel 1 to a voxel 8 in the second three-dimensional model, and parameters of spherical harmonic functions of the voxel 1 to the voxel 8 are W1 to W8 respectively, a parameter $W_A$ of a spherical harmonic function corresponding to the voxel A may be an average value of W1 to W8.

Finally, the third three-dimensional model is rendered based on the spherical harmonic function corresponding to each voxel in the third three-dimensional model.

In this solution, a plurality of three-dimensional models with different coarse granularities are generated, and the three-dimensional models are separately rendered, so that images with different resolution can be obtained, to meet requirements in different scenarios and improve rendering flexibility.

In a possible implementation, that the second three-dimensional model is rendered based on a spherical harmonic function corresponding to each voxel in the second three-dimensional model specifically includes: To-be-rendered voxels in the second three-dimensional model are determined based on a correspondence between each voxel in the third three-dimensional model and a pixel in the plurality of images, where the to-be-rendered voxels are voxels that are in the second three-dimensional model and that correspond to a third target voxel, and the third target voxel corresponds to a plurality of pixels in one of the plurality of images. In addition, the to-be-rendered voxels are rendered based on spherical harmonic functions corresponding to the to-be-rendered voxels.

In other words, because one voxel in the third three-dimensional model corresponds to a plurality of voxels in the second three-dimensional model, if a voxel in the third three-dimensional model corresponds to a plurality of pixels in an image, it indicates that a plurality of voxels that are in the second three-dimensional model and that correspond to the voxel also correspond to the plurality of pixels, and in this case, the plurality of voxels in the second three-dimensional model may be further rendered at a finer granularity; or if a voxel in the third three-dimensional model corresponds to only one pixel in an image, it indicates that a plurality of voxels that are in the second three-dimensional model and that correspond to the voxel also correspond to the pixel, and in this case, the plurality of voxels in the second three-dimensional model are not rendered.

In this solution, a three-dimensional model with a coarse granularity is first rendered, and based on a correspondence between a voxel in the three-dimensional model with the coarse granularity and a pixel, voxels that need to be rendered (that is, voxels corresponding to a plurality of pixels) in a three-dimensional model with a fine granularity are further determined, so that a quantity of voxels that need to be rendered can be minimized without affecting rendering quality, to save computing resources used for rendering.

In a possible implementation, that a spherical harmonic function corresponding to each voxel is determined based on a color of a pixel that is in a plurality of images and that corresponds to each of the plurality of voxels includes: determining the spherical harmonic function corresponding to each voxel by using a least squares method, to minimize a sum of squared differences between the color indicated by the spherical harmonic function corresponding to each voxel and the color of the pixel that is in the plurality of images and that corresponds to each voxel.

In other words, the color of the pixel that is in the plurality of images and that corresponds to the voxel is used as real data, and the spherical harmonic function corresponding to each voxel is solved by using the least squares method, to minimize an error between data obtained based on the spherical harmonic function and the real data.

In a possible implementation, a process of obtaining the first three-dimensional model includes: performing three-dimensional dense point cloud construction based on the plurality of images, to obtain point cloud data, where the point cloud data indicates a shape of an object in the plurality of images; and generating the first three-dimensional model based on sizes of the voxels and the point cloud data, where sizes of voxels that are in the first three-dimensional model and that are in a same scene are the same. In other words, for an object in a specific scene in the first three-dimensional model, sizes of voxels used to form the object are all the same and are pre-specified.

In a possible implementation, in the first three-dimensional model, a voxel in an outdoor scene is larger than a voxel in an indoor scene. For example, for an indoor object in the first three-dimensional model, a voxel used to form the object is a cube whose edge length is 1 mm. In other words, edge lengths of voxels in an indoor scene are all 1 mm. For an outdoor object in the first three-dimensional model, a voxel used to form the object is a cube whose edge length is 5 cm. In other words, edge lengths of voxels in an outdoor scene are all 5 cm.

In a possible implementation, that the second three-dimensional model is rendered includes: obtaining a rendering instruction, where the rendering instruction indicates a viewpoint for observing the second three-dimensional model; and rendering, based on the viewpoint indicated by the rendering instruction, a voxel that is in the second three-dimensional model and that is observable from the viewpoint.

A second aspect of this application provides a rendering apparatus. The rendering apparatus includes: an obtaining module, configured to obtain a first three-dimensional model, where the first three-dimensional model includes a plurality of voxels, and the first three-dimensional model is constructed based on a plurality of images from different viewpoints; and a processing module, configured to determine, based on a color of a pixel that is in a plurality of images and that corresponds to each of the plurality of voxels, a spherical harmonic function corresponding to each voxel, where the spherical harmonic function indicates a color of each voxel from different viewpoints. The processing module is further configured to delete a first target voxel from the first three-dimensional model based on the spherical harmonic function corresponding to each voxel, to obtain a second three-dimensional model, where a first difference value corresponding to the first target voxel is greater than a second difference value, the first difference value indicates a difference between a color indicated by a spherical harmonic function corresponding to the first target voxel and a color of a target pixel, the target pixel is a pixel that is in the plurality of images and that corresponds to the first target voxel, the second difference value indicates a difference between a color indicated by a spherical harmonic function corresponding to a background voxel and the color of the target pixel, and the background voxel is a voxel that is in the second three-dimensional model and that corresponds to the target pixel. The processing module is further configured to render the second three-dimensional model based on a spherical harmonic function corresponding to each voxel in the second three-dimensional model.

In a possible implementation, the processing module is further configured to update, based on a color of a pixel that is in the plurality of images and that corresponds to a second target voxel in the second three-dimensional model, a spherical harmonic function corresponding to the second target voxel, where a pixel that is in the plurality of images and that corresponds to the second target voxel changes after the first target voxel is deleted.

In a possible implementation, the processing module is further configured to: generate a third three-dimensional model based on the second three-dimensional model, where the third three-dimensional model includes a plurality of voxels, each voxel in the third three-dimensional model is obtained from N voxels in the second three-dimensional model, and N is an integer greater than 1; determine, based on spherical harmonic functions of the N voxels that are in the second three-dimensional model and that correspond to each voxel in the third three-dimensional model, a spherical harmonic function corresponding to each voxel in the third three-dimensional model; and render the third three-dimensional model based on the spherical harmonic function corresponding to each voxel in the third three-dimensional model.

In a possible implementation, the processing module is specifically configured to: determine to-be-rendered voxels in the second three-dimensional model based on a correspondence between each voxel in the third three-dimensional model and a pixel in the plurality of images, where the to-be-rendered voxels are voxels that are in the second three-dimensional model and that correspond to a third target voxel, and the third target voxel corresponds to a plurality of pixels in one of the plurality of images; and render the to-be-rendered voxels based on spherical harmonic functions corresponding to the to-be-rendered voxels.

In a possible implementation, the processing module is specifically configured to determine the spherical harmonic function corresponding to each voxel by using a least squares method, to minimize a sum of squared differences between the color indicated by the spherical harmonic function corresponding to each voxel and the color of the pixel that is in the plurality of images and that corresponds to each voxel.

In a possible implementation, the obtaining module is specifically configured to: perform three-dimensional dense point cloud construction based on the plurality of images, to obtain point cloud data, where the point cloud data indicates a shape of an object in the plurality of images; and generate the first three-dimensional model based on sizes of the voxels and the point cloud data, where sizes of voxels that are in the first three-dimensional model and that are in a same scene are the same.

In a possible implementation, in the first three-dimensional model, a voxel in an outdoor scene is larger than a voxel in an indoor scene.

In a possible implementation, the obtaining module is further configured to obtain a rendering instruction, where the rendering instruction indicates a viewpoint for observing the second three-dimensional model; and the processing module is further configured to render, based on the viewpoint indicated by the rendering instruction, a voxel that is in the second three-dimensional model and that is observable from the viewpoint.

A third aspect of this application provides an electronic device. The electronic device includes a memory and a processor, the memory stores code, the processor is configured to execute the code, and when the code is executed, the electronic device performs the method according to any one of the implementations of the first aspect.

A fourth aspect of this application provides a computer-readable storage medium. The computer-readable storage medium stores a computer program, and when the computer program is run on a computer, the computer is enabled to perform the method according to any one of the implementations of the first aspect.

A fifth aspect of this application provides a computer program product. When the computer program product is run on a computer, the computer is enabled to perform the method according to any one of the implementations of the first aspect.

A sixth aspect of this application provides a chip, including one or more processors. Some or all of the processors are configured to read and execute a computer program stored in a memory, to perform the method according to any one of the implementations of the first aspect.

Optionally, the chip further includes a memory, and the memory and the processor are connected to a memory through a circuit or a wire. Optionally, the chip further includes a communication interface, and the processor is connected to the communication interface. The communication interface is configured to receive data and/or information that need/needs to be processed. The processor obtains the data and/or the information from the communication interface, processes the data and/or the information, and outputs a processing result through the communication interface. The communication interface may be an input/output interface. The method provided in this application may be implemented by one chip, or may be cooperatively implemented by a plurality of chips.

For technical effects brought by any one of the design manners of the second aspect to the sixth aspect, refer to technical effects brought by different implementations of the first aspect. Details are not described herein again.

## BRIEF DESCRIPTION OF DRAWINGS

FIG. 1A shows a three-dimensional model obtained through manual mapping according to an embodiment of this application;
FIG. 1B shows a three-dimensional model constructed based on satellite images from different viewpoints according to an embodiment of this application;
FIG. 2 is a diagram of a structure of an electronic device 101 according to an embodiment of this application;
FIG. 3 is a diagram of an architecture of an application scenario according to an embodiment of this application;
FIG. 4 is a schematic flowchart of a rendering method according to an embodiment of this application;
FIG. 5 is a diagram of comparison between three-dimensional models before and after deletion of a voxel according to an embodiment of this application;
FIG. 6 is a diagram of a change in a pixel corresponding to a voxel in a three-dimensional model according to an embodiment of this application;
FIG. 7 is a diagram of a second three-dimensional model and a third three-dimensional model according to an embodiment of this application;

FIG. 8 shows a specific application scenario of a rendering method according to an embodiment of this application;

FIG. 9 is a schematic flowchart of another rendering method according to an embodiment of this application;

FIG. 10 is a diagram of a structure of a pyramid model according to an embodiment of this application;

FIG. 11 shows a rendering apparatus according to an embodiment of this application;

FIG. 12 is a diagram of a structure of an execution device according to an embodiment of this application; and

FIG. 13 is a diagram of a structure of a computer-readable storage medium according to an embodiment of this application.

## DESCRIPTION OF EMBODIMENTS

The following clearly and completely describes technical solutions in embodiments of this application with reference to accompanying drawings in embodiments of this application. It is clear that the described embodiments are merely some but not all of embodiments of this application.

In the specification, claims, and accompanying drawings of this application, the terms "first", "second", "third", "fourth", and the like (if exist) are intended to distinguish between similar objects but do not necessarily indicate a specific order or sequence. It should be understood that data used in such a way is interchangeable in proper circumstances so that embodiments described herein can be implemented in other orders than the order illustrated or described herein. In addition, the terms "include", "have", and any other variants are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

For ease of understanding, the following first describes technical terms in embodiments of this application.

(1) Three-dimensional model

A three-dimensional model is a simulation model constructed by using a computer three-dimensional modeling technology, and can present an actual scene object in the real world through virtualization.

(2) Voxel

Voxel is short for volume pixel (Volume Pixel). Three-dimensional space is evenly divided into cubes of a same size along three axes of a three-dimensional coordinate system, and each cube is referred to as a voxel. Put simply, a voxel is a smallest unit in three-dimensional space segmentation. For example, the voxel may be a 1*1*1 cube.

(3) Rendering

Rendering in computer drawing is a process of generating a two-dimensional image based on a three-dimensional model through software. Put simply, rendering is a process of generating a two-dimensional image corresponding to a three-dimensional model, for a specific viewpoint from which the three-dimensional model is observed. The two-dimensional image can present a scene, of the three-dimensional model, observed from the specific viewpoint.

(4) Radiance field

A radiance field is a functional equation mapping three-dimensional coordinates and a direction in space to a color and an opacity. Specifically, the radiance field may be represented as Formula 1.

$$\sigma, c = f(x, \theta) \qquad \text{Formula 2}$$

Formula 1 specifically means that a function $f$ is constructed, so that for any point $x$ in three-dimensional space, a color c and a spatial opacity $\sigma$ corresponding to the point $x$ observed in a direction $\theta$ can be obtained according to the function $f$.

Based on the radiance field, during rendering of any pixel in an image from any viewpoint, a color of the pixel can be obtained according to Formula 2.

$$C(\mathbf{r}) = \int_{t_n}^{t_f} T(t)\sigma(\mathbf{r}(t))\mathbf{c}(\mathbf{r}(t), \mathbf{d})dt, \ \text{ where } T(t) = \exp\left(-\int_{t_n}^{t} \sigma(\mathbf{r}(s))ds\right) \qquad \text{Formula 2}$$

Herein, t represents a distance from an observation point, r(t) represents physical coordinates corresponding to a ray at the distance, and σ represents a function mapping physical coordinates to an opacity. Therefore, T(t) represents an accumulated opacity of the ray from tn to t. c(x,d) represents a color value at physical coordinates x and a direction d, and C(r) represents an accumulated color value observed along a ray r, namely, an accumulated integral of a single point color c(r(t),d) weighted by the opacity T(t)σ(r(t)). Formula 2 may be specifically understood as integrating colors, of spatial points along a ray corresponding to a pixel, weighted by corresponding opacities.

(5) Spherical harmonic function

A spherical harmonic function is an angular portion of solutions to Laplace's equation in spherical coordinates, and is a well-known function in modern mathematics, widely applied in quantum mechanics, computer graphics, rendering lighting processing, spherical mapping, and other aspects. Specifically, the spherical harmonic function may be considered as mapping each point on a unit sphere (or each direction in three-dimensional space) to a complex function value. Therefore, a color presented by each voxel in any observation direction in three-dimensional space can be obtained by solving a spherical harmonic function corresponding to the voxel.

(6) Least squares method

A least squares method (also referred to as a least squares method) is a mathematical optimization technique, and finds a best function fit for data by minimizing a sum of squared errors. With the use of the least squares method, unknown data can be easily obtained, and a sum of squared errors between the obtained data and actual data is minimized.

(7) Virtual reality (Virtual Reality, VR)

As the name suggests, virtual reality is a combination of virtual and real. **In** theory, the virtual reality technology is a computer simulation system that allows creation and experience of a virtual world, and uses a computer to generate a simulated environment, so that a user can be immersed in the environment. The virtual reality technology is to generate electronic signals based on data from real life by using computer technologies, and combine the electronic signals with various output devices to transform the electronic signals into phenomena that can be perceived by people. These phenomena may be tangible objects in reality, or may be substances that are invisible to human naked eyes, and all these phenomena may be presented by using three-dimensional models. These phenomena are not directly visible to people, but are simulations of the real world that are created by using computer technologies. Therefore, they are referred to as virtual reality.

(8) Augmented reality (Augmented Reality, AR)

As a technology that cleverly integrates virtual information with the real world, AR extensively utilizes a plurality of technical means such as multimedia, three-dimensional modeling, real-time tracking and registration, intelligent interaction, and sensing. AR simulates virtual information such as a text, an image, a three-dimensional model, music, or a video generated by a computer, and applies simulated information to the real world. The two types of information complement each other, thereby implementing "augmentation" of the real world.

The augmented reality technology can effectively reflect content of the real world, and facilitate display of virtual information content. Such detailed content complements and superimposes each other. In visual augmented reality, a user needs to use a helmet display to enable the real world and computer graphics to overlap each other. After the overlapping, the user can fully see the real world surrounding the computer graphics. The augmented reality technology mainly involves new technologies and means such as multimedia, three-dimensional modeling, and scene fusion. Information content provided by augmented reality is significantly different from information content that can be perceived by humans.

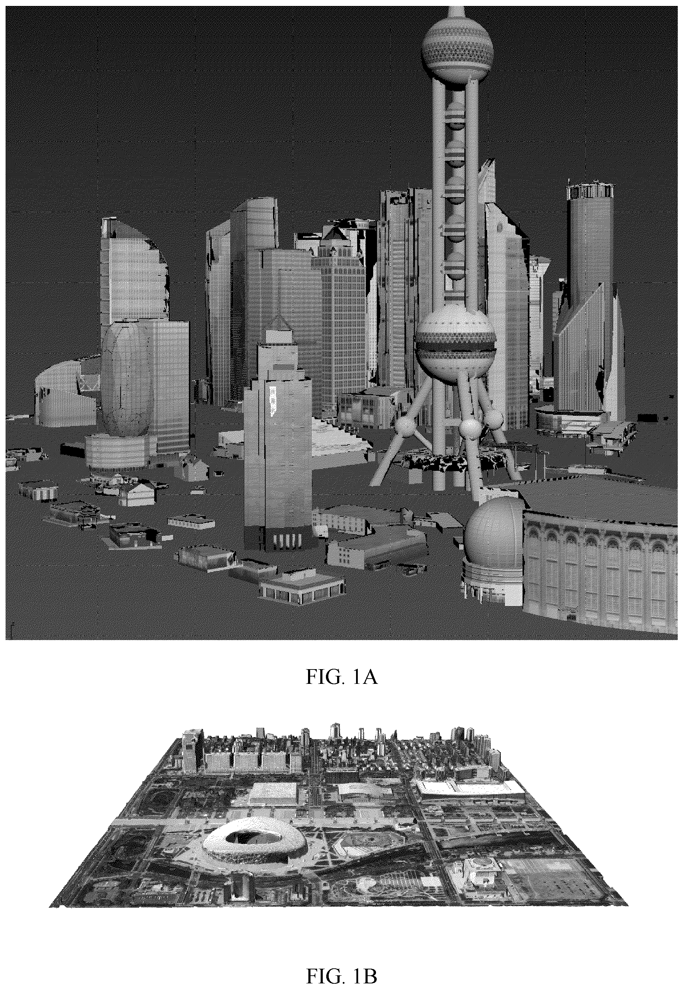

In a conventional method, a common modeling scheme for a three-dimensional model is manual mapping. First, a building structure model is manually constructed by using a point, line, and surface editing function of three-dimensional modeling software. Then, an on-site photo is obtained, and texture on the photo is manually attached to the building structure by using a material and texture editing function of the three-dimensional modeling software. For example, FIG. 1A shows a three-dimensional model obtained through manual mapping according to an embodiment of this application.

The manner of manual mapping usually requires a lot of manual participation, and distortion and misplacement inevitably occur in a process of manual texture attachment. Texture authenticity of the three-dimensional model cannot be ensured. The three-dimensional model can be used only for non-professional presentation and cannot be used for geometric feature extraction.

Because the manner of manual mapping requires a lot of manual participation, which is low in automation degree and is costly, construction of a three-dimensional model of a city currently mainly depends on a satellite mapping system. In the satellite mapping system, satellite images from different viewpoints are obtained mainly by performing side-sway and oblique imaging on an area of the city a plurality of times using a high-resolution optical satellite, and the three-dimensional model is constructed based on shot satellite images. In a process of constructing the three-dimensional model, there is a need to determine a color and an opacity of any element, in the three-dimensional model, observed in any direction, to render the three-dimensional model from different viewpoints. For example, FIG. 1B shows a three-dimensional model constructed based on satellite images from different viewpoints according to an embodiment of this application.

In a related technology, a neural network model is mainly used to solve a color and an opacity of each element in the three-dimensional model in different observation directions. However, the neural network model usually includes a large quantity of network parameters, and the neural network model needs to be trained iteratively. Consequently, training and inference of the neural network model is time-consuming, resulting in low efficiency in rendering the three-dimensional model.

In view of this, embodiments of this application provide a rendering method. A spherical harmonic function is used to represent a color of each voxel, and color representation effect of three-dimensional models before and after deletion of each voxel is compared to determine an opacity of the voxel. In this way, a color of a three-dimensional model from each viewpoint can be represented by using a small quantity of parameters. In addition, a process of solving a color and an opacity of a voxel is simple, and iterative training is not required, thereby effectively improving efficiency in rendering a three-dimensional model.

A method for constructing a three-dimensional real scene model provided in embodiments of this application may be applied to an electronic device. In an example, the electronic device may be, for example, a server, a smartphone (mobile phone), a personal computer (personal computer, PC), a notebook computer, a tablet computer, a smart television, a mobile internet device (mobile internet device, MID), a wearable device, a virtual reality (virtual reality, VR) device, an augmented reality (augmented reality, AR) device, a wireless electronic device in industrial control (industrial control), a wireless electronic device in self driving (self driving), a wireless electronic device in remote medical surgery (remote medical surgery), a wireless electronic device in a smart grid (smart grid), a wireless electronic device in transportation safety (transportation safety), a wireless electronic device in a smart city (smart city), a wireless electronic device in a smart home (smart home), or the like. For ease of description, an example in which the method provided in embodiments of this application is applied to a server is used below to describe the method provided in embodiments of this application.

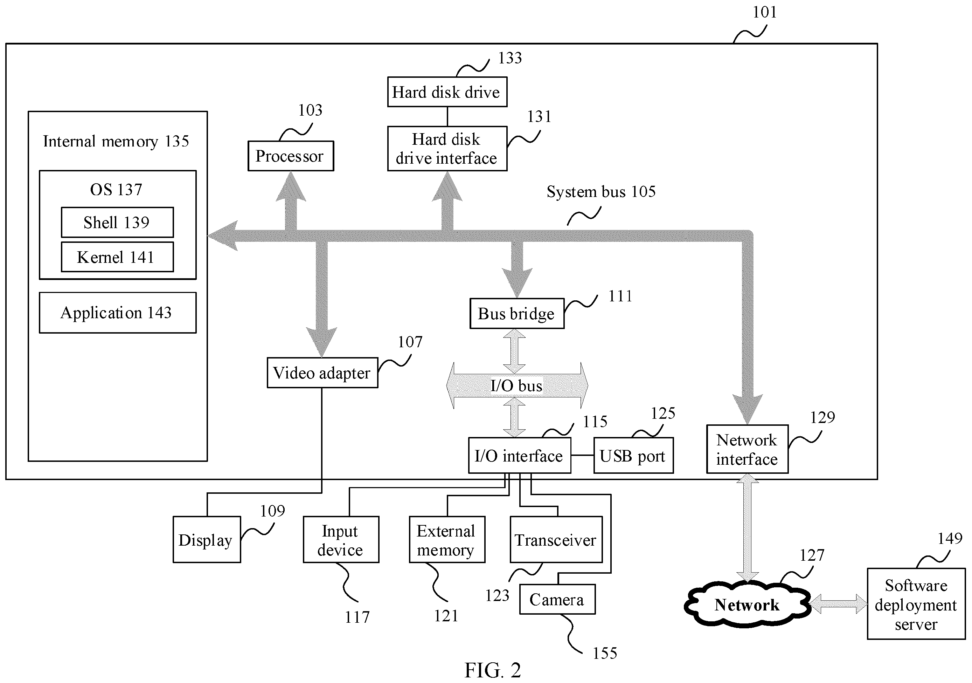

FIG. 2 is a diagram of a structure of an electronic device 101 according to an embodiment of this application. As shown in FIG. 2, the electronic device 101 includes a processor 103, and the processor 103 is coupled to a system bus 105. The processor 103 may be one or more processors, and each processor may include one or more processor cores. A video adapter (video adapter) 107 may drive a display 109, and the display 109 is coupled to the system bus 105. The system bus 105 is coupled to an input/output (I/O) bus through a bus bridge 111. An I/O interface 115 is coupled to the I/O bus. The I/O interface 115 communicates with a plurality of I/O devices, such as an input device 117 (for example, a touchscreen), an external memory 121 (for example, a hard disk, a floppy disk, an optical disc, or a USB flash drive), a multimedia interface, a transceiver 123 (which may send and/or receive a radio communication signal), a camera 155 (which may capture static and dynamic digital video images), and an external USB port 125. Optionally, an interface connected to the I/O interface 115 may be a USB port.

The processor 103 may be any conventional processor, including a reduced instruction set computing (reduced instruction set Computing, RISC) processor, a complex instruction set computing (complex instruction set computing, CISC) processor, or a combination thereof. Optionally, the processor may be a dedicated apparatus, for example, an ASIC.

The electronic device 101 may communicate with a software deployment server 149 through a network interface 129. For example, the network interface 129 is a hardware network interface, for example, a network interface card. A network 127 may be an external network such as the Internet, or may be an internal network such as the Ethernet or a virtual private network (virtual private network, VPN). Optionally, the network 127 may alternatively be a wireless network, for example, a Wi-Fi network or a cellular network.

A hard disk drive interface 131 is coupled to the system bus 105. A hardware driving interface is connected to a hard disk drive 133. An internal memory 135 is coupled to the system bus 105. Data running in the internal memory 135 may include an operating system (OS) 137, an application 143, and a schedule of the electronic device 101.

The operating system includes a shell 139 and a kernel (kernel) 141. The shell 139 is an interface between a user and the kernel of the operating system. The shell is an outermost layer of the operating system. The shell manages interaction between the user and the operating system: waiting for an input from the user, interpreting the input from the user to the operating system, and processing various output results of the operating system.

The kernel 141 includes parts in the operating system that are used to manage a memory, a file, a peripheral, and a system resource. The kernel 141 directly interacts with hardware. The kernel of the operating system usually runs a process, provides inter-process communication, and provides CPU time slice management, interruption, memory management, and I/O management, and the like.

For example, when the electronic device 101 is a smartphone, the application 143 includes a program related to instant messaging. In an embodiment, when the application 143 needs to be executed, the electronic device 101 may download the application 143 from the software deployment server 149.

The foregoing describes a device to which the method provided in embodiments of this application is applied. The following describes a scenario to which the method provided in embodiments of this application is applied.

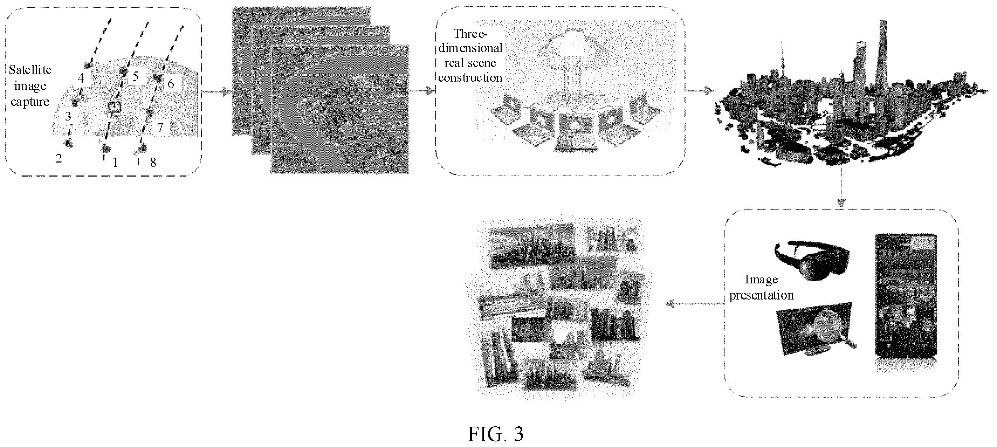

FIG. 3 is a diagram of an architecture of an application scenario according to an embodiment of this application. As shown in FIG. 3, first, a plurality of satellites deployed high in the sky are used to capture satellite images. The plurality of satellites shoot a same area on the ground to capture a plurality of satellite images, and transmit the captured satellite images to a server on the ground.

After receiving the satellite images transmitted by the satellites, the server constructs a three-dimensional model based on the satellite images, and renders the three-dimensional model by using the rendering method provided in embodiments of this application.

Finally, the server sends a rendering result of the three-dimensional model to a user terminal according to a request of the user terminal, to implement functions such as presenting a real scene model on the terminal side, visual positioning, VR interaction, and AR interaction.

It may be understood that FIG. 3 describes construction and rendering of a three-dimensional model that are implemented by using satellite images. In some other scenarios, a three-dimensional model of an indoor scene object may be constructed and rendered by capturing images from different viewpoints in an indoor scene. Alternatively, a computer automatically generates images from different viewpoints, and a virtual three-dimensional model is constructed based on the images generated by the computer; and further, the three-dimensional model is rendered. In conclusion, a scenario in which a three-dimensional model is constructed is not limited in embodiments of this application.

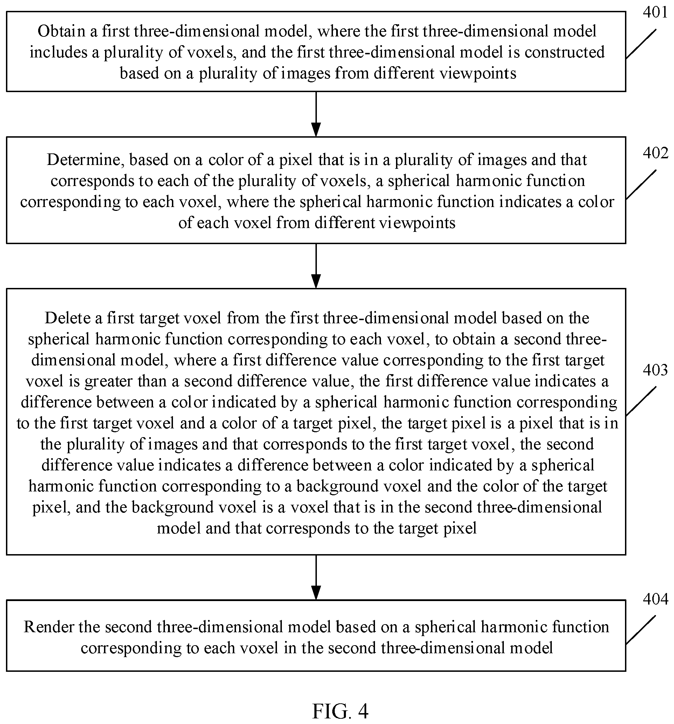

FIG. 4 is a schematic flowchart of a rendering method according to an embodiment of this application. As shown in FIG. 4, the rendering method includes step 401 to step 404.

Step 401: Obtain a first three-dimensional model, where the first three-dimensional model includes a plurality of voxels, and the first three-dimensional model is constructed based on a plurality of images from different viewpoints.

In this embodiment, the first three-dimensional model may be a three-dimensional model including a plurality of voxels, and can represent a three-dimensional shape of an object presented in the plurality of images. Put simply, a voxel in the first three-dimensional model may be considered as a smallest unit forming the first three-dimensional model. The voxels are, for example, cubes of a same size. The first three-dimensional model can be obtained by stacking the plurality of cubes. In addition, the first three-dimensional model may represent only the three-dimensional shape of the object, but does not represent a surface color of the object. In other words, an object surface of the first three-dimensional model is colorless.

In addition, the plurality of images from different viewpoints are a plurality of images captured of a same scene object from different viewpoints. For example, assuming that the plurality of images used to construct the first three-dimensional model are 2000 satellite images, the plurality of images may be images shot of a same city by a satellite at different locations on an orbit.

For example, in a process of obtaining the first three-dimensional model, three-dimensional dense point cloud construction may be performed based on the plurality of images, to obtain point cloud data. The point cloud data indicates a shape of the object in the plurality of images. The point cloud data is a set of massive points on a surface of the object. The three-dimensional dense point cloud construction is performed based on the plurality of images from different viewpoints according to a three-dimensional reconstruction algorithm, so that spatial coordinates of each sampling point on the surface of the object can be obtained and therefore a set of points can be obtained. The set of points is the point cloud data. Specifically, for a manner of performing the three-dimensional dense point cloud construction based on the plurality of images, refer to a conventional technology. Details are not described herein.

Then, the first three-dimensional model is generated based on the point cloud data and a size of each voxel used to construct the first three-dimensional model. Sizes of voxels that are in the first three-dimensional model and that are in a same scene are the same. In other words, for an object in a specific scene in the first three-dimensional model, sizes of voxels used to form the object are all the same and are pre-specified. For example, in the first three-dimensional model, a voxel in an outdoor scene may be larger than a voxel in an indoor scene. For an indoor object in the first three-dimensional model, a voxel used to form the object is a cube whose edge length is 1 mm. In other words, edge lengths of voxels in an indoor scene are all 1 mm. For an outdoor object in the first three-dimensional model, a voxel used to form the object is a cube whose edge length is 5 cm. In other words, edge lengths of voxels in an outdoor scene are all 5 cm.

Specifically, after edge lengths of the voxels used to form the first three-dimensional model are determined, coordinates of voxels corresponding to points in the point cloud data can be obtained based on coordinates of the points, and then the first three-dimensional model is constructed based on the coordinates of the voxels. For example, assuming that an edge length of a voxel is r and coordinates of any point p in the point cloud data are (x1, y1, z1), a scale of a voxel P corresponding to the point p on an X-axis is the floor of x1/r, a scale of the voxel P on a Y-axis is the floor of y1/r, and a scale of the voxel P on a Z-axis is the floor of z1/r. The floor refers to taking an integer less than a calculation result when the calculation result is not an integer. Scales of a voxel may indicate locations of the voxel on three axes, and specific coordinates of the voxel in a coordinate system may be determined based on the scales of the voxel and a size of the voxel. Specifically, assuming that the scales of the voxel on the three axes are (x2, y2, z2) and an edge length of the voxel is r, the specific coordinates of the voxel are (x2*r, y2*r, z2*r).

Step 402: Determine, based on a color of a pixel that is in a plurality of images and that corresponds to each of the plurality of voxels, a spherical harmonic function corresponding to each voxel, where the spherical harmonic function indicates a color of each voxel from different viewpoints.

In this embodiment, the first three-dimensional model is constructed based on the plurality of images from different viewpoints. Based on a process of constructing the first three-dimensional model, the pixel that is in each of the plurality of images and that corresponds to each voxel in the first three-dimensional model can be obtained. A voxel and a pixel that have a correspondence represent a same object in the first three-dimensional model and an image respectively.

When the first three-dimensional model is obtained, the following may be preset: an opacity of each voxel in the first three-dimensional model is 1. In other words, each voxel is opaque. When the voxels are opaque, a front voxel blocks a rear voxel in the first three-dimensional model during observation of the first three-dimensional model from any viewpoint. Then, the spherical harmonic function corresponding to each voxel is obtained through calculation based on the color of the pixel that is in the plurality of images and that corresponds to each voxel in the first three-dimensional model. The spherical harmonic function can indicate a color of the voxel from different viewpoints.

Put simply, because a shooting viewpoint for each image is fixed, and each of the plurality of images corresponds to a different shooting viewpoint, for any voxel in the first three-dimensional model, a color of a pixel that is in each image and that corresponds to the voxel may be considered as a color of the voxel from the viewpoint for the image. In this way, a color of each voxel from different viewpoints can be obtained by determining the color of the pixel that is in the plurality of images and that corresponds to each voxel. Then, the spherical harmonic function corresponding to each voxel can be obtained based on the color of each voxel from different viewpoints. For example, it is assumed that an image 1 to an image 10 are shot from a viewpoint 1 to a viewpoint 10 respectively, and colors of pixels that are in the image 1 to the image 10 and that correspond to a voxel A are a color 1 to a color 10 respectively. In this case, it may be determined that colors of the voxel A from the viewpoint 1 to the viewpoint 10 are the color 1 to the color 10 respectively.

For example, it is assumed that a spherical harmonic function of each voxel is represented as c(w;d)=w*d, where w represents a parameter of the spherical harmonic function, d represents a viewpoint, and c(w;d) represents a color of the voxel from the viewpoint d. When colors (c1, c2, c3) from some viewpoints (d1, d2, d3) are given, w is solved to make c(w;d1), c(w;d2), and c(w;d3) be as close as possible to c1, c2, and c3, to obtain the spherical harmonic function of each voxel.

Optionally, in a process of solving the spherical harmonic function, the spherical harmonic function corresponding to each voxel may be determined by using the least squares method, to minimize a sum of squared differences between the color indicated by the spherical harmonic function corresponding to each voxel and the color of the pixel that is in the plurality of images and that corresponds to each voxel. In other words, the color of the pixel that is in the plurality of images and that corresponds to the voxel is used as real data, and the spherical harmonic function corresponding to each voxel is solved by using the least squares method, to minimize an error between data obtained based on the spherical harmonic function and the real data.

Specifically, for a voxel x, a parameter of a spherical harmonic function of the voxel x is W, where W is a matrix with a size of 3*9. The voxel x is observed in directions (x, y, z), and colors of the voxel x calculated based on the spherical harmonic function is W* $f(x, y, z)$, where $f(x, y, z)$ is a value of the spherical harmonic function in 0 degrees to 2 degrees (9 dimensions), and W*f is a three-dimensional RGB color value.

Herein,

$$f(x, y, z) = [\lambda_0, \ \lambda_1 \cdot y, \ \lambda_1 \cdot z, \ \lambda_1 \cdot x, \ \lambda_2 \cdot xy, \ \lambda_2 \cdot yz, \ \lambda_3 \cdot (3z^2 - 1), \ \lambda_2 \cdot xz$$

$$\lambda_2 \cdot (x^2 - z^2)]; \ \lambda_0 = \frac{1}{2\sqrt{\pi}}; \ \lambda_1 = \sqrt{3}\lambda_0; \ \lambda_2 = \sqrt{15}\lambda_0; \ \lambda_3 = \sqrt{1.25}\lambda_0 .$$

Step 403: Delete a first target voxel from the first three-dimensional model based on the spherical harmonic function corresponding to each voxel, to obtain a second three-dimensional model, where a first difference value corresponding to the first target voxel is greater than a second difference value, the first difference value indicates a difference between a color indicated by a spherical harmonic function corresponding to the first target voxel and a color of a target pixel, the target pixel is a pixel that is in the plurality of images and that corresponds to the first target voxel, the second difference value indicates a difference between a color indicated by a spherical harmonic function corresponding to a background voxel and the color of the target pixel, and the background voxel is a voxel that is in the second three-dimensional model and that corresponds to the target pixel.

In this embodiment, in step 402, when the spherical harmonic function corresponding to each voxel is solved, it is assumed that an opacity of each voxel is 1. In other words, each voxel is opaque. Actually, in the first three-dimensional model, some voxels whose opacities are 0 usually exist. Therefore, in this step, an opacity of each voxel in the first three-dimensional model may be further determined.

Specifically, the first target voxel in the first three-dimensional model is a voxel whose opacity is 0. In other words, the first target voxel is transparent. Because a transparent voxel does not present a color, and the transparent voxel does not block another voxel located behind the voxel, deleting the transparent voxel does not affect rendering effect of a three-dimensional model. In this case, after it is determined that an opacity of a voxel is 0, the voxel may be deleted.

In step 403, logic for determining whether an opacity of a voxel is 0 is as follows: For any voxel, color representation effect of a three-dimensional model before deletion of the voxel is calculated, and color representation effect of a three-dimensional model after deletion of the voxel is calculated. If the color representation effect of the three-dimensional model before deletion of the voxel is better, it indicates that the voxel does not need to be deleted, that is, an opacity of the voxel is 1. If the color representation effect of the three-dimensional model after deletion of the voxel is better, it indicates that the voxel needs to be deleted, that is, an opacity of the voxel is 0.

Specifically, for a voxel, color representation effect of a three-dimensional model before deletion of the voxel may be determined based on a difference between a color indicated by a spherical harmonic function corresponding to the voxel and a color of a pixel that is in a plurality of images and that corresponds to the voxel. A smaller difference between the color indicated by the spherical harmonic function corresponding to the voxel and the color of the pixel that is in the plurality of images and that corresponds to the voxel indicates better color representation effect of the three-dimensional model.

Similarly, color representation effect of a three-dimensional model after deletion of a voxel may be determined based on a difference between a color of a pixel that is in a plurality of images and that corresponds to the voxel and a color indicated by a spherical harmonic function corresponding to another voxel blocked by the voxel. For example, it is assumed that a voxel A corresponds to a pixel 1 to a pixel 10 in a plurality of images respectively, and after the voxel A is deleted, a voxel corresponding to the pixel 1 to the pixel 10 in the plurality of images respectively becomes a voxel B. In this case, color representation effect of a three-dimensional model before deletion of the voxel A may be determined based on differences between colors indicated by a spherical harmonic function corresponding to the voxel A and colors of the pixel 1 to the pixel 10. Color representation effect of a three-dimensional model after deletion of the voxel A may be determined based on differences between colors indicated by a spherical harmonic function corresponding to the voxel B and the colors of the pixel 1 to the pixel 10.

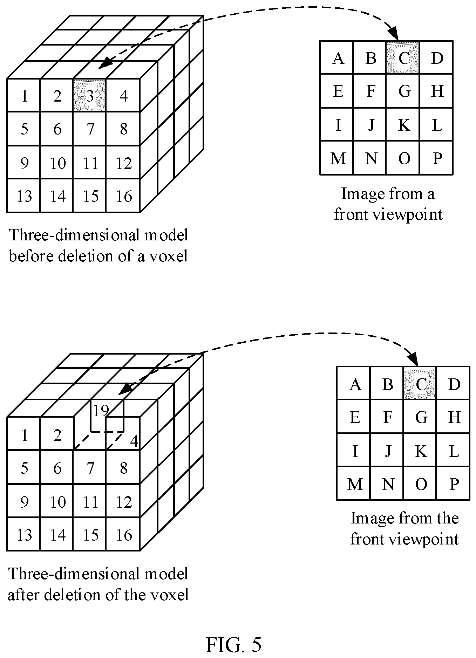

For example, FIG. 5 is a diagram of comparison between three-dimensional models before and after deletion of a voxel according to an embodiment of this application. As shown in FIG. 5, a three-dimensional model before deletion of a voxel is a cube, and the cube includes 64 voxels. From a front viewpoint, 16 voxels in the three-dimensional model may be observed, and the 16 voxels are a voxel 1 to a voxel 16. In addition, an image obtained by shooting the three-dimensional model from the front viewpoint includes 16 pixels, and the 16 pixels are a pixel A to a pixel P. The voxel 3 in the three-dimensional model is a to-be-deleted voxel, and a pixel that is in the image from the front viewpoint and that corresponds to the voxel 3 is the pixel C.

After the voxel 3 is deleted from the three-dimensional model (or an opacity of the voxel 3 in the three-dimensional model is set to 0), a voxel 19 originally blocked by the voxel 3 may be seen from the front viewpoint. In other words, from the front viewpoint, the voxel 1, the voxel 2, the voxel 19, and the voxel 4 to the voxel 16 in the three-dimensional model may be observed. In this case, after the voxel 3 is deleted, a voxel that is in the three-dimensional model and that corresponds to the pixel C in the image becomes the voxel 19.

Based on the foregoing logic, in this step, the first target voxel in the first three-dimensional model may be determined based on the spherical harmonic function corresponding to each voxel. The first difference value corresponding to the first target voxel is greater than the second difference value, the first difference value indicates the difference between the color indicated by the spherical harmonic function corresponding to the first target voxel and the color of the target pixel, the target pixel is the pixel that is in the plurality of images and that corresponds to the first target voxel, the second difference value indicates the difference between the color indicated by the spherical harmonic function corresponding to the background voxel and the color of the target pixel, and the background voxel is the voxel that is in the second three-dimensional model after deletion of the first target voxel and that corresponds to the target pixel.

Put simply, the first target voxel in the first three-dimensional model corresponds to the target pixel in the plurality of images, and after the first target voxel is deleted, a voxel corresponding to the target pixel becomes a second target voxel. Color representation effect of the three-dimensional model before deletion of the first target voxel may be determined by obtaining the first difference value between the color indicated by the spherical harmonic function corresponding to the first target voxel and the color of the target pixel. Color representation effect of the three-dimensional model after deletion of the first target voxel may be determined by obtaining the second difference value between the color indicated by the spherical harmonic function corresponding to the second target voxel and the color of the target pixel. If the first difference value corresponding to the first target voxel is greater than the second difference value corresponding to the second target voxel, it indicates that the color representation effect of the three-dimensional model before deletion of the first target voxel is poorer than the color representation effect of the three-dimensional model after deletion of the first target voxel. In other words, existence of the first target voxel causes deterioration of the color representation effect of the three-dimensional model. In this case, it may be determined that an opacity of the first target voxel in the first three-dimensional model is 0, and further, the first target voxel is deleted.

In an actual application, one or more first target voxels may exist in the first three-dimensional model. In this case, all determined first target voxels may be deleted. In this way, opacities of all voxels in the second three-dimensional model are 1, and opacities of all first target voxels that are deleted from the first three-dimensional model are 0.

Step 404: Render the second three-dimensional model based on a spherical harmonic function corresponding to each voxel in the second three-dimensional model.

Finally, after the second three-dimensional model is obtained, the second three-dimensional model may be rendered from any viewpoint based on the spherical harmonic function corresponding to each voxel in the second three-dimensional model, to obtain a rendering result.

In this embodiment, a spherical harmonic function of each voxel in a three-dimensional model is solved based on a color of a pixel in a plurality of images from different viewpoints, to use the spherical harmonic function to represent a color of each voxel from different viewpoints. In addition, with reference to a color of a pixel in the plurality of images, color representation effect of three-dimensional models before and after deletion of each voxel is compared, to determine whether the voxel needs to be deleted (that is, whether an opacity of the voxel is 0), and further obtain an opacity of each voxel in the three-dimensional model. Finally, a three-dimensional model can be rendered based on an opacity of each voxel in the three-dimensional model and a color of each voxel from different viewpoints.

In this solution, a spherical harmonic function is used to represent a color of each voxel, and color representation effect of three-dimensional models before and after deletion of each voxel is compared to determine an opacity of the voxel. In this way, a color of a three-dimensional model from each viewpoint can be represented by using a small quantity of parameters, which avoids using a large quantity of complex parameters in a neural network and can effectively save storage space. In addition, a process of solving a color and an opacity of a voxel is simple, and iterative training is not required, thereby effectively improving efficiency in rendering a three-dimensional model.

Optionally, in a process of rendering the second three-dimensional model, a rendering instruction may be first obtained. The rendering instruction indicates a viewpoint for observing the second three-dimensional model. The rendering instruction may be an instruction given by a user. For example, in a process in which the user views the second three-dimensional model by using a display of a computer, the user may move, by operating a mouse or a keyboard, a viewpoint for viewing the second three-dimensional model. In this case, the computer may obtain a rendering instruction triggered by the user by operating the mouse or the keyboard. The rendering instruction indicates the viewpoint for observing the second three-dimensional model. Then, a voxel that is in the second three-dimensional model and that is observable from the viewpoint indicated by the rendering instruction is rendered based on the viewpoint indicated by the rendering instruction, to obtain a rendering result (that is, an image obtained when the second three-dimensional model is viewed from the viewpoint).

In this solution, the rendering instruction of the user is obtained, and then the second three-dimensional model is rendered, so that the second three-dimensional model can be rendered according to a rendering requirement, to reduce unnecessary rendering and save computing resources used for rendering.

Optionally, before step 404, because the second three-dimensional model is obtained by deleting the first target voxel from the first three-dimensional model, and after the first target voxel is deleted, a pixel that is in the plurality of images and that corresponds to the second target voxel in the second three-dimensional model originally blocked by the first target voxel changes, a spherical harmonic function corresponding to the second target voxel in the second three-dimensional model may be re-solved, to ensure accuracy of the spherical harmonic function corresponding to the second target voxel in the second three-dimensional model.

For example, after the second three-dimensional model is obtained, a spherical harmonic function corresponding to the second target voxel is updated based on a color of a pixel that is in the plurality of images and that corresponds to the second target voxel in the second three-dimensional model, where a pixel that is in the plurality of images and that corresponds to the second target voxel changes after the first target voxel is deleted.

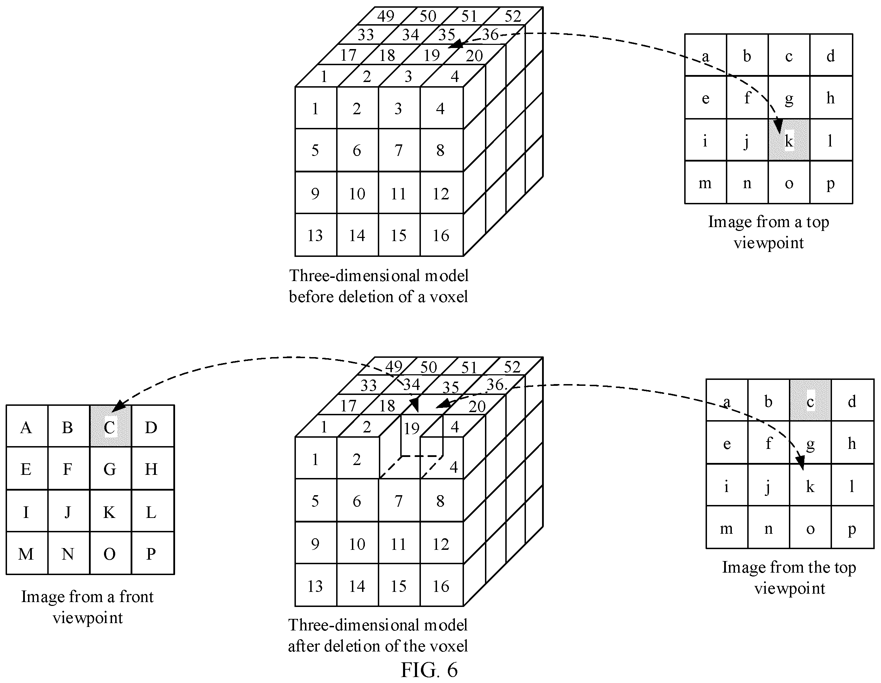

In a possible example, FIG. 6 is a diagram of a change in a pixel corresponding to a voxel in a three-dimensional model according to an embodiment of this application. As shown in FIG. 6, a three-dimensional model before deletion of a voxel (that is, the foregoing first three-dimensional model) is a cube, and the cube includes 64 voxels. From a top viewpoint, 16 voxels in the three-dimensional model may be observed, and the 16 voxels are a voxel 49 to a voxel 52, a voxel 33 to a voxel 36, a voxel 17 to a voxel 20, and a voxel 1 to a voxel 4. In addition, an image obtained by shooting the three-dimensional model from the top viewpoint includes 16 pixels, the 16 pixels are a pixel a to a pixel p, and the 16 pixels respectively correspond to the 16 voxels in the three-dimensional model that are observed from the top viewpoint. Before the voxel 3 is deleted, the voxel 19 corresponds to only the pixel k in the image from the top viewpoint.

After the voxel 3 is deleted from the three-dimensional model, a three-dimensional model after deletion of the voxel (that is, the foregoing second three-dimensional model) is obtained. In addition, for the voxel 19 in the three-dimensional model after deletion of the voxel, the voxel 19 corresponds to the pixel k in the image from the top viewpoint, and the voxel 19 further corresponds to a pixel C in an image from a front viewpoint. In other words, a pixel that is in images and that corresponds to the voxel 19 changes after the voxel 3 is deleted. In this case, a spherical harmonic function corresponding to the voxel 19 may be updated based on a color of the pixel k in the image from the top viewpoint and a color of the pixel C in the image from the front viewpoint.

In this solution, after a new three-dimensional model is obtained by deleting a voxel, a voxel that is in the three-dimensional model and that corresponds to a changed pixel in a plurality of images is determined, and a spherical harmonic function of the voxel is updated based on a color of the pixel that is in the plurality of images and that corresponds to the voxel, so that a spherical harmonic function of the voxel can better reflect a color of the voxel, to ensure rendering effect of the three-dimensional model.

It may be understood that, in different scenarios, the user has different requirements on resolution of a rendering result. In some scenarios, the user may expect to obtain a rendering result with high resolution. In some other scenarios, the user may expect to obtain a rendering result with low resolution. For example, when the user views the second three-dimensional model by using a small-screen mobile terminal such as a smartphone, because the mobile terminal does not support display of a rendering result with high resolution, the user expects to obtain a rendering result with low resolution. For another example, when the user views the second three-dimensional model by using a personal computer, the user may expect to obtain a rendering result with high resolution, to ensure viewing experience.

Based on this, in this embodiment, a plurality of three-dimensional models with different coarse granularities are generated, and the three-dimensional models with different coarse granularities are separately rendered, to meet rendering requirements in different scenarios.

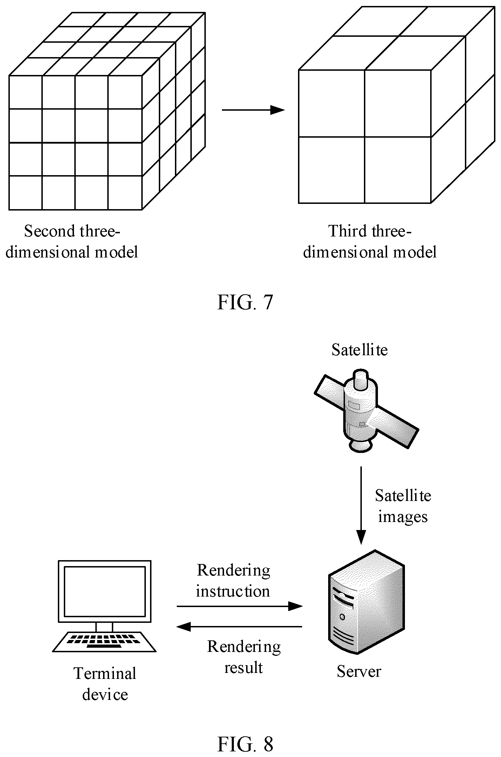

Optionally, after the second three-dimensional model is obtained, a third three-dimensional model may be generated based on the second three-dimensional model. The third three-dimensional model includes a plurality of voxels, each voxel in the third three-dimensional model is obtained from N voxels in the second three-dimensional model, and N is an integer greater than 1. In other words, a volume of a voxel in the third three-dimensional model is larger than a volume of a voxel in the second three-dimensional model, and a quantity of voxels in the third three-dimensional model is less than a quantity of voxels in the second three-dimensional model. In other words, compared with the second three-dimensional model, the third three-dimensional model is a three-dimensional model with a coarser granularity. For example, FIG. 7 is a diagram of a second three-dimensional model and a third three-dimensional model according to an embodiment of this application. As shown in FIG. 7, assuming that the second three-dimensional model is a cube including 64 voxels, and one voxel in the third three-dimensional model is formed by eight voxels in the second three-dimensional model, the third three-dimensional model may be generated based on the 64 voxels in the second three-dimensional model. The third three-dimensional model includes only eight voxels, and each voxel in the third three-dimensional model is formed by eight voxels in the second three-dimensional model.

After the third three-dimensional model is obtained, a spherical harmonic function corresponding to each voxel in the third three-dimensional model is determined based on spherical harmonic functions of the N voxels that are in the second three-dimensional model and that correspond to each voxel in the third three-dimensional model. Because each voxel in the third three-dimensional model is formed by a plurality of voxels in the second three-dimensional model, and the spherical harmonic function corresponding to each voxel in the second three-dimensional model is already determined, an average value of spherical harmonic functions corresponding to the plurality of voxels in the second three-dimensional model may be obtained, to determine a spherical harmonic function of the voxel that is in the third three-dimensional model and that corresponds to the plurality of voxels in the second three-dimensional model. For example, assuming that a voxel A in the third three-dimensional model corresponds to a voxel 1 to a voxel 8 in the second three-dimensional model, and parameters of spherical harmonic functions of the voxel 1 to the voxel 8 are W1 to W8 respectively, a parameter $W_A$ of a spherical harmonic function corresponding to the voxel A may be an average value of W1 to W8.

Finally, after the spherical harmonic function corresponding to each voxel in the third three-dimensional model is determined, the third three-dimensional model may be rendered based on the spherical harmonic function corresponding to each voxel in the third three-dimensional model.

In this solution, a plurality of three-dimensional models with different coarse granularities are generated, and the three-dimensional models are separately rendered, so that images with different resolution can be obtained, to meet requirements in different scenarios and improve rendering flexibility.

Optionally, after the second three-dimensional model and the third three-dimensional model are obtained, the third three-dimensional model may be first rendered, and then the second three-dimensional model is rendered. In other words, a three-dimensional model with a coarse granularity is first rendered.

In a process of rendering the second three-dimensional model, to-be-rendered voxels in the second three-dimensional model are determined based on a correspondence between each voxel in the third three-dimensional model and a pixel in the plurality of images. The to-be-rendered voxels are voxels that are in the second three-dimensional model and that correspond to a third target voxel, and the third target voxel corresponds to a plurality of pixels in one of the plurality of images. In other words, because one voxel in the third three-dimensional model corresponds to a plurality of voxels in the second three-dimensional model, if a voxel in the third three-dimensional model corresponds to a plurality of pixels in an image, it indicates that a plurality of voxels that are in the second three-dimensional model and that correspond to the voxel also correspond to the plurality of pixels, and in this case, the plurality of voxels in the second three-dimensional model may be further rendered at a finer granularity; or if a voxel in the third three-dimensional model corresponds to only one pixel in an image, it indicates that a plurality of voxels that are in the second three-dimensional model and that correspond to the voxel also correspond to the pixel, and in this case, the plurality of voxels in the second three-dimensional model are not rendered.

Finally, the to-be-rendered voxels in the second three-dimensional model are rendered based on spherical harmonic functions corresponding to the to-be-rendered voxels. In other words, a voxel in the second three-dimensional model other than the to-be-rendered voxel is not rendered.

In this solution, a three-dimensional model with a coarse granularity is first rendered, and based on a correspondence between a voxel in the three-dimensional model with the coarse granularity and a pixel, voxels that need to be rendered (that is, voxels corresponding to a plurality of pixels) in a three-dimensional model with a fine granularity are further determined, so that a quantity of voxels that need to be rendered can be minimized without affecting rendering quality, to save computing resources used for rendering.

It may be understood that the foregoing describes a process of generating the third three-dimensional model with a coarse granularity based on the second three-dimensional model. In an actual application, a plurality of three-dimensional models with coarse granularities may be generated based on the second three-dimensional model, and the coarse granularities of the three-dimensional models are different.

For example, nine three-dimensional models with coarser granularities are generated based on the second three-dimensional model. An edge length of a voxel in a $1^{st}$ three-dimensional model with a coarse granularity is twice an edge length of a voxel in the second three-dimensional model, an edge length of a voxel in a $2^{nd}$ three-dimensional model with a coarse granularity is four times the edge length of the voxel in the second three-dimensional model, an edge length of a voxel in a $3^{rd}$ three-dimensional model with a coarse granularity is eight times the edge length of the voxel in the second three-dimensional model, and by analogy, an edge length of a voxel in a $9^{th}$ three-dimensional model with a coarse granularity is 512 times the edge length of the voxel in the second three-dimensional model.

In other words, after the nine three-dimensional models with the coarser granularities are generated based on the second three-dimensional model, the second three-dimensional model and the nine three-dimensional models with the coarser granularities may jointly form a pyramid, the second three-dimensional model is at a bottom layer of the pyramid, and in the pyramid, an edge length of a voxel in a three-dimensional model at an upper layer is twice an edge length of a voxel in a three-dimensional model at a lower layer. In this case, when a plurality of three-dimensional models in the pyramid are rendered, a three-dimensional model at a top layer (that is, a three-dimensional model including a smallest quantity of voxels) may be first rendered, and then other three-dimensional models in the pyramid are rendered step by step downward, to render the three-dimensional models in an order from a coarse granularity to a fine granularity.

For ease of understanding, the following describes the rendering method provided in embodiments of this application in detail with reference to an example. FIG. 8 shows a specific application scenario of a rendering method according to an embodiment of this application. As shown in FIG. 8, a satellite shoots a same area in a city from different viewpoints to obtain a plurality of images from different viewpoints, and transmits the plurality of images back to a server on the ground. After receiving the plurality of images from different viewpoints, the server constructs a three-dimensional model based on the plurality of images, and renders a three-dimensional model from a specific viewpoint based on a rendering instruction sent by a terminal device, to obtain a rendering result. Finally, the terminal device receives the rendering result returned by the server, and displays, on a display screen, the rendering result returned by the server.

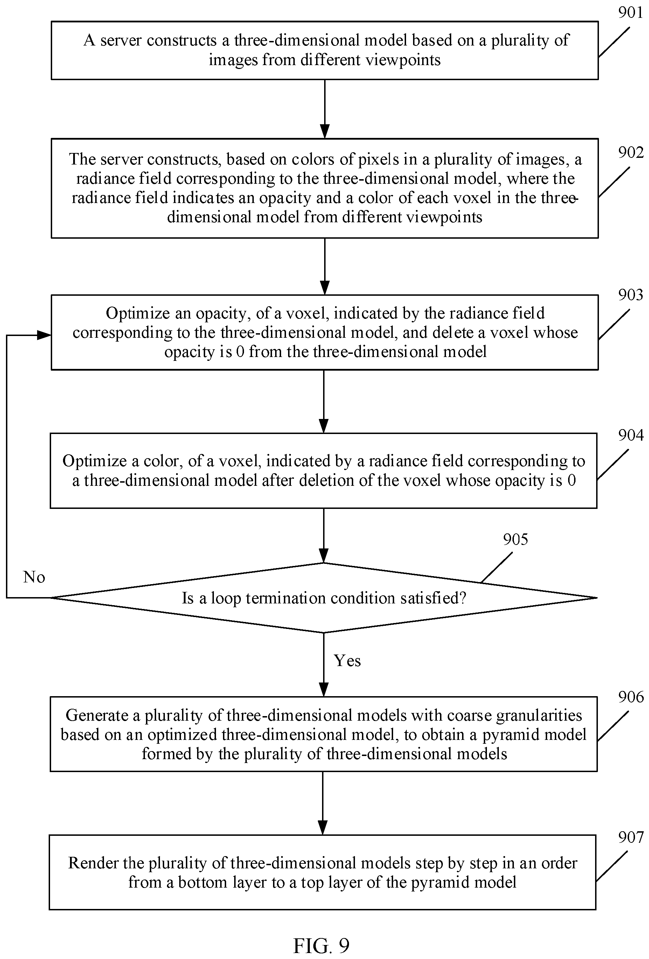

FIG. 9 is a schematic flowchart of another rendering method according to an embodiment of this application. As shown in FIG. 9, the rendering method includes step 901 to step 907.

Step 901: A server constructs a three-dimensional model based on a plurality of images from different viewpoints.

In this step, when the server obtains the plurality of images from different viewpoints returned by a satellite, the server constructs the three-dimensional model based on the plurality of images. For example, the server first performs three-dimensional dense point cloud construction based on the plurality of images, to obtain point cloud data, and then the server generates the three-dimensional model based on the point cloud data and a size of each voxel used to construct the three-dimensional model.

Step 902: The server constructs, based on colors of pixels in a plurality of images, a radiance field corresponding to the three-dimensional model, where the radiance field indicates an opacity and a color of each voxel in the three-dimensional model from different viewpoints.

In this step, a dictionary may be established to construct the radiance field corresponding to the three-dimensional model, and the dictionary is a data structure including a large quantity of key-value pairs (key, value). For any key-value pair in the dictionary, the key-value pair includes a key and a value corresponding to the key. The key in the key-value pair is used to record coordinates of a voxel in the three-dimensional model, the value in the key-value pair is used to record an opacity and a color corresponding to the voxel in the three-dimensional model, and the color corresponding to the voxel may be represented by using a spherical harmonic function corresponding to the voxel. In this case, the value in the key-value pair may be a parameter that records the opacity and the spherical harmonic function corresponding to the voxel.

After the dictionary is established, an opacity corresponding to each voxel in the dictionary may be set to 1, and a spherical harmonic function corresponding to each voxel is obtained based on a color in the plurality of images, to obtain all key-value pairs in the dictionary. In this way, the dictionary that records a large quantity of key-value pairs may be considered as the radiance field corresponding to the three-dimensional model. An opacity and a color corresponding to each voxel observable in the three-dimensional model when the three-dimensional model is observed from any viewpoint can be obtained based on the radiance field corresponding to the three-dimensional model.

Step 903: Optimize an opacity, of a voxel, indicated by the radiance field corresponding to the three-dimensional model, and delete a voxel whose opacity is 0 from the three-dimensional model.

Because it is assumed that opacities of all voxels in the three-dimensional model are all 1 in step 902, an opacity of a voxel in the three-dimensional model is optimized in step 903. In step 903, a criterion for determining whether an opacity of a voxel is 0 is as follows: If color representation effect of a three-dimensional model after deletion of a voxel is better than color representation effect of a three-dimensional model before deletion of the voxel, it indicates that existence of the voxel causes deterioration of rendering effect of the three-dimensional model. In this case, an opacity of the voxel should be 0, and further, the voxel whose opacity is 0 is deleted. Specifically, for a process of determining a voxel whose opacity is 0 and deleting the voxel whose opacity is 0 in step 903, refer to step 403. Details are not described herein again.

Step 904: Optimize a color, of a voxel, indicated by a radiance field corresponding to a three-dimensional model after deletion of the voxel whose opacity is 0.

Because the voxel whose opacity is 0 is deleted from the three-dimensional model, a pixel that is in the plurality of images and that corresponds to a voxel, in the three-dimensional model, originally blocked by the deleted voxel changes. In this case, to ensure accuracy of a spherical harmonic function corresponding to a voxel in the three-dimensional model, a color of the voxel indicated by the radiance field corresponding to the three-dimensional model may be optimized. In other words, a spherical harmonic function corresponding to the voxel, in the three-dimensional model, originally blocked by the deleted voxel is re-solved.

Step 905: Determine whether a loop termination condition is satisfied.

To ensure accuracy of a spherical harmonic function corresponding to a voxel in the three-dimensional model, in this embodiment, step 903 and step 904 may be cyclically performed for a plurality of times to optimize an opacity and a color of a voxel in the three-dimensional model as much as possible. Specifically, the loop termination condition is, for example, that a quantity of loops reaches a preset quantity of times, for example, 5 times or 10 times, or the loop termination condition may be that no voxel that needs to be deleted exists. A specific manner of the loop termination condition is not limited in this embodiment.

If the loop termination condition is satisfied, perform step 906, or if the loop termination condition is not satisfied, continue to perform step 903.

Step 906: Generate a plurality of three-dimensional models with coarse granularities based on an optimized three-dimensional model, to obtain a pyramid model formed by the plurality of three-dimensional models.

After the loop termination condition is satisfied, the optimized three-dimensional model may be obtained. Then, the optimized three-dimensional model is considered as a three-dimensional model with a finest granularity, to generate the plurality of three-dimensional models with the coarse granularities. The coarse granularities of the plurality of three-dimensional models are different. In this way, based on the optimized three-dimensional model and the newly generated plurality of three-dimensional models with the coarse granularities, the pyramid model formed by the plurality of three-dimensional models can be obtained. Each layer of the pyramid model corresponds to one three-dimensional model. In addition, granularities of three-dimensional models corresponding to different layers of the pyramid model are different. A granularity of a three-dimensional model corresponding to a bottom layer of the pyramid model is the finest. In other words, the three-dimensional model includes a largest quantity of voxels. A granularity of a three-dimensional model corresponding to a top layer of the pyramid model is the coarsest. In other words, the three-dimensional model includes a smallest quantity of voxels. In addition, in the pyramid model, each voxel in a three-dimensional model at an upper layer is formed by a plurality of voxels in a three-dimensional model at a lower layer.

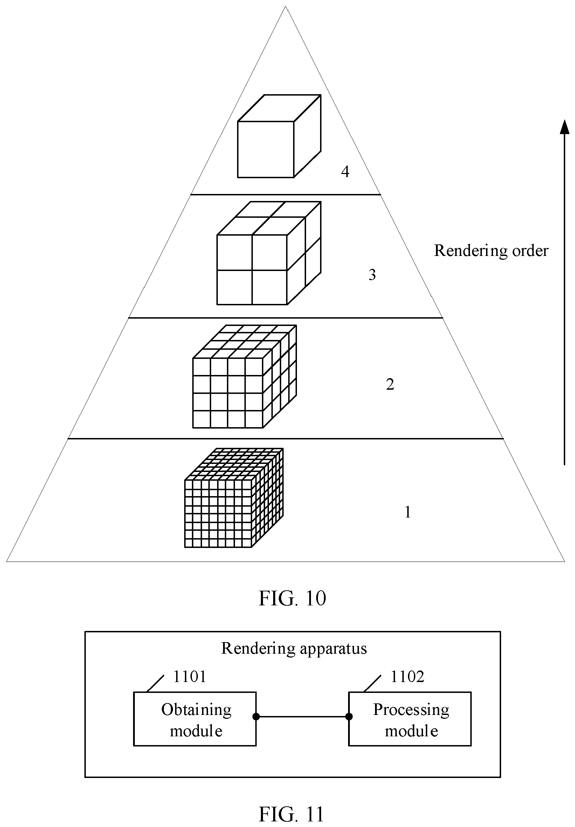

For example, FIG. 10 is a diagram of a structure of a pyramid model according to an embodiment of this application. As shown in FIG. 10, the pyramid model includes four layers in total, and each layer corresponds to one three-dimensional model. Any voxel in a three-dimensional model at an upper layer is formed by eight voxels in a three-dimensional model at a lower layer. Specifically, a three-dimensional model at a 1st layer of the pyramid model is a cube including 512 voxels, a three-dimensional model at a 2nd layer of the pyramid model is a cube including 64 voxels, a three-dimensional model at a 3rd layer of the pyramid model is a cube including eight voxels, and a three-dimensional model at a 4th layer of the pyramid model is a cube including one voxel. In addition, shapes of three-dimensional models at all layers of the pyramid model are the same, but quantities of voxels included in the three-dimensional models are different.

Step 907: Render the plurality of three-dimensional models step by step in an order from the bottom layer to the top layer of the pyramid model.

In step 907, the three-dimensional model at the bottom layer of the pyramid model is first rendered, and then three-dimensional models at upper layers of the pyramid are rendered step by step. In addition, when a three-dimensional model at any layer of the pyramid model is rendered, to-be-rendered voxels in a three-dimensional model at an upper layer of the pyramid model are determined. Specifically, if a voxel in a three-dimensional model at a layer of the pyramid model corresponds to a plurality of pixels in one image, it is determined that a plurality of voxels that are in a three-dimensional model at an upper layer and that correspond to the voxel are all to-be-rendered voxels. If a voxel in a three-dimensional model at a layer of the pyramid model corresponds to only one pixel in one image, it is determined that a plurality of voxels that are in a three-dimensional model at an upper layer and that correspond to the voxel do not need to be rendered.

The foregoing describes the rendering method provided in embodiments of this application. The following describes a device configured to perform the rendering method.

FIG. 11 shows a rendering apparatus according to an embodiment of this application. The rendering apparatus includes: an obtaining module 1101, configured to obtain a first three-dimensional model, where the first three-dimensional model includes a plurality of voxels, and the first three-dimensional model is constructed based on a plurality of images from different viewpoints; and a processing module 1102, configured to determine, based on a color of a pixel that is in a plurality of images and that corresponds to each of the plurality of voxels, a spherical harmonic function corresponding to each voxel, where the spherical harmonic function indicates a color of each voxel from different viewpoints. The processing module 1102 is further configured to delete a first target voxel from the first three-dimensional model based on the spherical harmonic function corresponding to each voxel, to obtain a second three-dimensional model, where a first difference value corresponding to the first target voxel is greater than a second difference value, the first difference value indicates a difference between a color indicated by a spherical harmonic function corresponding to the first target voxel and a color of a target pixel, the target pixel is a pixel that is in the plurality of images and that corresponds to the first target voxel, the second difference value indicates a difference between a color indicated by a spherical harmonic function corresponding to a background voxel and the color of the target pixel, and the background voxel is a voxel that is in the second three-dimensional model and that corresponds to the target pixel. The processing module 1102 is further configured to render the second three-dimensional model based on a spherical harmonic function corresponding to each voxel in the second three-dimensional model.

In a possible implementation, the processing module 1102 is further configured to update, based on a color of a pixel that is in the plurality of images and that corresponds to a second target voxel in the second three-dimensional model, a spherical harmonic function corresponding to the second target voxel, where a pixel that is in the plurality of images and that corresponds to the second target voxel changes after the first target voxel is deleted.

In a possible implementation, the processing module 1102 is further configured to: generate a third three-dimensional model based on the second three-dimensional model, where the third three-dimensional model includes a plurality of voxels, each voxel in the third three-dimensional model is obtained from N voxels in the second three-dimensional model, and N is an integer greater than 1; determine, based on spherical harmonic functions of the N voxels that are in the second three-dimensional model and that correspond to each voxel in the third three-dimensional model, a spherical harmonic function corresponding to each voxel in the third three-dimensional model; and render the third three-dimensional model based on the spherical harmonic function corresponding to each voxel in the third three-dimensional model.

In a possible implementation, the processing module 1102 is specifically configured to: determine to-be-rendered voxels in the second three-dimensional model based on a correspondence between each voxel in the third three-dimensional model and a pixel in the plurality of images, where the to-be-rendered voxels are voxels that are in the second three-dimensional model and that correspond to a third target voxel, and the third target voxel corresponds to a plurality of pixels in one of the plurality of images; and render the to-be-rendered voxels based on spherical harmonic functions corresponding to the to-be-rendered voxels.

In a possible implementation, the processing module 1102 is specifically configured to determine the spherical harmonic function corresponding to each voxel by using a least squares method, to minimize a sum of squared differences between the color indicated by the spherical harmonic function corresponding to each voxel and the color of the pixel that is in the plurality of images and that corresponds to each voxel.

In a possible implementation, the obtaining module 1101 is specifically configured to: perform three-dimensional dense point cloud construction based on the plurality of images, to obtain point cloud data, where the point cloud data indicates a shape of an object in the plurality of images; and generate the first three-dimensional model based on sizes of the voxels and the point cloud data, where sizes of voxels that are in the first three-dimensional model and that are in a same scene are the same.

In a possible implementation, in the first three-dimensional model, a voxel in an outdoor scene is larger than a voxel in an indoor scene.

In a possible implementation, the obtaining module 1101 is further configured to obtain a rendering instruction, where the rendering instruction indicates a viewpoint for observing the second three-dimensional model; and the processing module 1102 is further configured to render, based on the viewpoint indicated by the rendering instruction, a voxel that is in the second three-dimensional model and that is observable from the viewpoint.

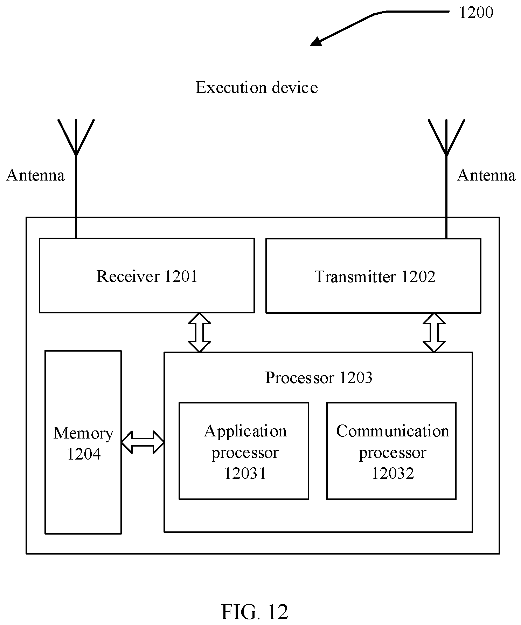

The following describes an execution device provided in an embodiment of this application. FIG. 12 is a diagram of a structure of an execution device according to an embodiment of this application. An execution device 1200 may be specifically a mobile phone, a tablet computer, a notebook computer, a smart wearable device, a server, or the like. This is not limited herein. Specifically, the execution device 1200 includes a receiver 1201, a transmitter 1202, a processor 1203, and a memory 1204 (there may be one or more processors 1203 in the execution device 1200, and one processor is used as an example in FIG. 12). The processor 1203 may include an application processor 12031 and a communication processor 12032. In some embodiments of this application, the receiver 1201, the transmitter 1202, the processor 1203, and the memory 1204 may be connected through a bus or in another manner.

The memory 1204 may include a read-only memory and a random access memory, and provide instructions and data to the processor 1203. A part of the memory 1204 may further include a non-volatile random access memory (non-volatile random access memory, NVRAM). The memory 1204 stores a processor and operation instructions, an executable module, or a data structure; or a subset thereof; or an extended set thereof. The operation instructions may include various operation instructions used to implement various operations.

The processor 1203 controls an operation of the execution device. In a specific application, components of the execution device are coupled together through a bus system. In addition to a data bus, the bus system may include a power bus, a control bus, a status signal bus, and the like. However, for clear description, various types of buses in the figure are marked as the bus system.

The method disclosed in embodiments of this application may be applied to the processor 1203, or may be implemented by the processor 1203. The processor 1203 may be an integrated circuit chip with a signal processing capability. During implementation, the steps of the foregoing method may be completed by using a hardware integrated logic circuit in the processor 1203 or instructions in a form of software. The processor 1203 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1203 may implement or perform the method, steps, and logical block diagrams disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed through a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1204, and the processor 1203 reads information in the memory 1204 and completes the steps of the foregoing method in combination with hardware of the processor.

The receiver 1201 may be configured to receive input digit or character information, and generate a signal input related to related setting and function control of the execution device. The transmitter 1202 may be configured to output digit or character information through a first interface. The transmitter 1202 may be further configured to send instructions to a disk group through the first interface, to modify data in the disk group. The transmitter 1202 may further include a display device such as a display.

In this embodiment of this application, in a case, the processor 1203 is configured to perform the method in embodiments corresponding to FIG. 5 or FIG. 9.

An electronic device provided in this embodiment of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to enable a chip in the execution device to perform the rendering method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

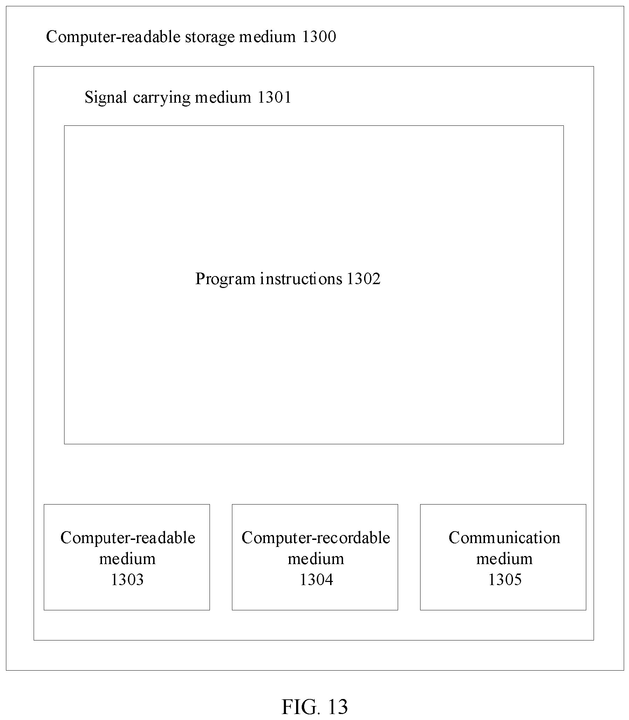

FIG. 13 is a diagram of a structure of a computer-readable storage medium according to an embodiment of this application. This application further provides a computer-readable storage medium. In some embodiments, the method disclosed in FIG. 5 or FIG. 9 may be implemented as computer program instructions encoded on the computer-readable storage medium or encoded on another non-transitory medium or product in a machine-readable format.

FIG. 13 schematically shows a conceptual partial view of an example computer-readable storage medium arranged according to at least some embodiments shown herein, and the example computer-readable storage medium includes a computer program for executing a computer process on a computing device.

In an embodiment, a computer-readable storage medium 1300 is provided by using a signal carrying medium 1301. The signal carrying medium 1301 may include one or more program instructions 1302. When the program instructions are run by one or more processors, functions or some functions described for FIG. 5 or FIG. 9 may be provided. In addition, the program instructions 1302 in FIG. 13 are also described as example instructions.

In some examples, the signal carrying medium 1301 may include a computer-readable medium 1303, for example, but not limited to, a hard disk drive, a compact disc (CD), a digital video disc (DVD), a digital tape, a memory, a ROM, or a RAM.

In some implementations, the signal carrying medium 1301 may include a computer-recordable medium 1304, for example, but not limited to, a memory, a read/write (R/W) CD, or an R/W DVD. In some implementations, the signal carrying medium 1301 may include a communication medium 1305, for example, but not limited to, a digital and/or analog communication medium (for example, an optical fiber cable, a waveguide, a wired communication link, or a wireless communication link). Therefore, for example, the signal carrying medium 1301 may be conveyed by a communication medium 1305 in a wireless form (for example, a wireless communication medium complying with the IEEE 802.13 standard or another transmission protocol).

The one or more program instructions 1302 may be, for example, computer-executable instructions or logic implementation instructions. In some examples, a computing device of a computing device may be configured to provide various operations, functions, or actions in response to the program instructions 1302 conveyed to the computing device by using one or more of the computer-readable medium 1303, the computer-recordable medium 1304, and/or the communication medium 1305.

In addition, it should be noted that the described apparatus embodiment is merely an example. The units described as separate parts may or may not be physically separate, and parts displayed as units may or may not be physical units, may be located in one place, or may be distributed on a plurality of network units. Some or all of modules may be selected according to actual requirements to achieve the objectives of the solutions of embodiments. In addition, in the accompanying drawings of the apparatus embodiment provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be completed by a computer program can be easily implemented through corresponding hardware. Moreover, a specific hardware structure used to implement a same function may be in various forms, for example, in a form of analog circuit, digital circuit, or dedicated circuit. However, as for this application, a software program implementation is a better implementation in most cases. Based on such an understanding, the technical solutions of this application essentially or the part contributing to the conventional technology may be implemented in a form of software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the method in embodiments of this application.

All or some of the foregoing embodiments may be implemented through software, hardware, firmware, or any combination thereof. When software is used to implement embodiments, all or some of the embodiments may be implemented in a form of computer program product.

The computer program product includes one or more computer instructions. When the computer program instructions are loaded and executed on a computer, all or some of procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A rendering method, comprising:

obtaining a first three-dimensional model, wherein the first three-dimensional model comprises a plurality of voxels, and the first three-dimensional model is constructed based on a plurality of images from different viewpoints;

determining, based on a color of a pixel that is in a plurality of images and that corresponds to each of the plurality of voxels, a spherical harmonic function corresponding to each voxel, wherein the spherical harmonic function indicates a color of each voxel from different viewpoints;

deleting a first target voxel from the first three-dimensional model based on the spherical harmonic function corresponding to each voxel, to obtain a second three-dimensional model, wherein a first difference value corresponding to the first target voxel is greater than a second difference value, the first difference value indicates a difference between a color indicated by a spherical harmonic function corresponding to the first target voxel and a color of a target pixel, the target pixel is a pixel that is in the plurality of images and that corresponds to the first target voxel, the second difference value indicates a difference between a color indicated by a spherical harmonic function corresponding to a background voxel and the color of the target pixel, and the background voxel is a voxel that is in the second three-dimensional model and that corresponds to the target pixel; and

rendering the second three-dimensional model based on a spherical harmonic function corresponding to each voxel in the second three-dimensional model.

2. The method according to claim 1, wherein the method further comprises:

updating, based on a color of a pixel that is in the plurality of images and that corresponds to a second target voxel in the second three-dimensional model, a spherical harmonic function corresponding to the second target voxel, wherein

a pixel that is in the plurality of images and that corresponds to the second target voxel changes after the first target voxel is deleted.

3. The method according to claim 1 or 2, wherein the method further comprises:

generating a third three-dimensional model based on the second three-dimensional model, wherein the third three-dimensional model comprises a plurality of voxels, each voxel in the third three-dimensional model is obtained from N voxels in the second three-dimensional model, and N is an integer greater than 1;

determining, based on spherical harmonic functions of the N voxels that are in the second three-dimensional model and that correspond to each voxel in the third three-dimensional model, a spherical harmonic function corresponding to each voxel in the third three-dimensional model; and

rendering the third three-dimensional model based on the spherical harmonic function corresponding to each voxel in the third three-dimensional model.

4. The method according to claim 3, wherein the rendering the second three-dimensional model based on a spherical harmonic function corresponding to each voxel in the second three-dimensional model comprises:

determining to-be-rendered voxels in the second three-dimensional model based on a correspondence between each voxel in the third three-dimensional model and a pixel in the plurality of images, wherein the to-be-rendered voxels are voxels that are in the second three-dimensional model and that correspond to a third target voxel, and the third target voxel corresponds to a plurality of pixels in one of the plurality of images; and

rendering the to-be-rendered voxels based on spherical harmonic functions corresponding to the to-be-rendered voxels.

5. The method according to any one of claims 1 to 4, wherein the determining, based on a color of a pixel that is in a plurality of images and that corresponds to each of the plurality of voxels, a spherical harmonic function corresponding to each voxel comprises:

determining the spherical harmonic function corresponding to each voxel by using a least squares method, to minimize a sum of squared differences between the color indicated by the spherical harmonic function corresponding to each voxel and the color of the pixel that is in the plurality of images and that corresponds to each voxel.

6. The method according to any one of claims 1 to 5, wherein the obtaining a first three-dimensional model comprises:

performing three-dimensional dense point cloud construction based on the plurality of images, to obtain point cloud data, wherein the point cloud data indicates a shape of an object in the plurality of images; and

generating the first three-dimensional model based on sizes of the voxels and the point cloud data, wherein sizes of voxels that are in the first three-dimensional model and that are in a same scene are the same.

7. The method according to claim 6, wherein in the first three-dimensional model, a voxel in an outdoor scene is larger than a voxel in an indoor scene.

8. The method according to any one of claims 1 to 7, wherein the rendering the second three-dimensional model comprises:

obtaining a rendering instruction, wherein the rendering instruction indicates a viewpoint for observing the second three-dimensional model; and

rendering, based on the viewpoint indicated by the rendering instruction, a voxel that is in the second three-dimensional model and that is observable from the viewpoint.

9. A rendering apparatus, comprising:

an obtaining module, configured to obtain a first three-dimensional model, wherein the first three-dimensional model comprises a plurality of voxels, and the first three-dimensional model is constructed based on a plurality of images from different viewpoints; and

a processing module, configured to determine, based on a color of a pixel that is in a plurality of images and that corresponds to each of the plurality of voxels, a spherical harmonic function corresponding to each voxel, wherein the spherical harmonic function indicates a color of each voxel from different viewpoints, wherein

the processing module is further configured to delete a first target voxel from the first three-dimensional model based on the spherical harmonic function corresponding to each voxel, to obtain a second three-dimensional model, wherein a first difference value corresponding to the first target voxel is greater than a second difference value, the first difference value indicates a difference between a color indicated by a spherical harmonic function corresponding to the first target voxel and a color of a target pixel, the target pixel is a pixel that is in the plurality of images and that corresponds to the first target voxel, the second difference value indicates a difference between a color indicated by a spherical harmonic function corresponding to a background voxel and the color of the target pixel, and the background voxel is a voxel that is in the second three-dimensional model and that corresponds to the target pixel; and

the processing module is further configured to render the second three-dimensional model based on a spherical harmonic function corresponding to each voxel in the second three-dimensional model.

10. The apparatus according to claim 9, wherein the processing module is further configured to:

update, based on a color of a pixel that is in the plurality of images and that corresponds to a second target voxel in the second three-dimensional model, a spherical harmonic function corresponding to the second target voxel, wherein

a pixel that is in the plurality of images and that corresponds to the second target voxel changes after the first target voxel is deleted.

11. The apparatus according to claim 9 or 10, wherein the processing module is further configured to:

generate a third three-dimensional model based on the second three-dimensional model, wherein the third three-dimensional model comprises a plurality of voxels, each voxel in the third three-dimensional model is obtained from N voxels in the second three-dimensional model, and N is an integer greater than 1;

determine, based on spherical harmonic functions of the N voxels that are in the second three-dimensional model and that correspond to each voxel in the third three-dimensional model, a spherical harmonic function corresponding to each voxel in the third three-dimensional model; and

render the third three-dimensional model based on the spherical harmonic function corresponding to each voxel in the third three-dimensional model.

12. The apparatus according to claim 11, wherein the processing module is specifically configured to:

determine to-be-rendered voxels in the second three-dimensional model based on a correspondence between each voxel in the third three-dimensional model and a pixel in the plurality of images, wherein the to-be-rendered voxels are voxels that are in the second three-dimensional model and that correspond to a third target voxel, and the third target voxel corresponds to a plurality of pixels in one of the plurality of images; and

render the to-be-rendered voxels based on spherical harmonic functions corresponding to the to-be-rendered voxels.

13. The apparatus according to any one of claims 9 to 12, wherein the processing module is specifically configured to: determine the spherical harmonic function corresponding to each voxel by using a least squares method, to minimize a sum of squared differences between the color indicated by the spherical harmonic function corresponding to each voxel and the color of the pixel that is in the plurality of images and that corresponds to each voxel.

14. The apparatus according to any one of claims 9 to 13, wherein the obtaining module is specifically configured to:

    perform three-dimensional dense point cloud construction based on the plurality of images, to obtain point cloud data, wherein the point cloud data indicates a shape of an object in the plurality of images; and
    generate the first three-dimensional model based on sizes of the voxels and the point cloud data, wherein sizes of voxels that are in the first three-dimensional model and that are in a same scene are the same.

15. The apparatus according to claim 14, wherein in the first three-dimensional model, a voxel in an outdoor scene is larger than a voxel in an indoor scene.

16. The apparatus according to any one of claims 9 to 15, wherein

    the obtaining module is further configured to obtain a rendering instruction, wherein the rendering instruction indicates a viewpoint for observing the second three-dimensional model; and
    the processing module is further configured to render, based on the viewpoint indicated by the rendering instruction, a voxel that is in the second three-dimensional model and that is observable from the viewpoint.

17. A rendering apparatus, comprising a memory and a processor, wherein the memory stores code, the processor is configured to execute the code, and when the code is executed, the apparatus performs the method according to any one of claims 1 to 8.

18. A computer storage medium, wherein the computer storage medium stores instructions, and when the instructions are executed by a computer, the computer is enabled to perform the method according to any one of claims 1 to 8.

19. A computer program product, wherein the computer program product stores instructions, and when the instructions are executed by a computer, the computer is enabled to perform the method according to any one of claims 1 to 8.

FIG. 1A

FIG. 1B

FIG. 2

FIG. 3

Obtain a first three-dimensional model, where the first three-dimensional model includes a plurality of voxels, and the first three-dimensional model is constructed based on a plurality of images from different viewpoints

401

Determine, based on a color of a pixel that is in a plurality of images and that corresponds to each of the plurality of voxels, a spherical harmonic function corresponding to each voxel, where the spherical harmonic function indicates a color of each voxel from different viewpoints

402

Delete a first target voxel from the first three-dimensional model based on the spherical harmonic function corresponding to each voxel, to obtain a second three-dimensional model, where a first difference value corresponding to the first target voxel is greater than a second difference value, the first difference value indicates a difference between a color indicated by a spherical harmonic function corresponding to the first target voxel and a color of a target pixel, the target pixel is a pixel that is in the plurality of images and that corresponds to the first target voxel, the second difference value indicates a difference between a color indicated by a spherical harmonic function corresponding to a background voxel and the color of the target pixel, and the background voxel is a voxel that is in the second three-dimensional model and that corresponds to the target pixel

403

Render the second three-dimensional model based on a spherical harmonic function corresponding to each voxel in the second three-dimensional model

404

FIG. 4

Three-dimensional model
before deletion of a voxel

Image from a
front viewpoint

Three-dimensional model
after deletion of the voxel

Image from the
front viewpoint

FIG. 5

Three-dimensional model
before deletion of a voxel

Image from a top
viewpoint

Image from a front
viewpoint

Three-dimensional model
after deletion of the voxel

Image from the top
viewpoint

FIG. 6

Second three-
dimensional model

Third three-
dimensional model

FIG. 7

Satellite

Satellite
images

Rendering
instruction

Rendering
result

Terminal
device

Server

FIG. 8

901

A server constructs a three-dimensional model based on a plurality of images from different viewpoints

902

The server constructs, based on colors of pixels in a plurality of images, a radiance field corresponding to the three-dimensional model, where the radiance field indicates an opacity and a color of each voxel in the three-dimensional model from different viewpoints

903

Optimize an opacity, of a voxel, indicated by the radiance field corresponding to the three-dimensional model, and delete a voxel whose opacity is 0 from the three-dimensional model

904

Optimize a color, of a voxel, indicated by a radiance field corresponding to a three-dimensional model after deletion of the voxel whose opacity is 0

905

Is a loop termination condition satisfied?

No

Yes

906

Generate a plurality of three-dimensional models with coarse granularities based on an optimized three-dimensional model, to obtain a pyramid model formed by the plurality of three-dimensional models

907

Render the plurality of three-dimensional models step by step in an order from a bottom layer to a top layer of the pyramid model

FIG. 9

FIG. 10

FIG. 11

1200

Execution device

Antenna | Antenna

| Receiver 1201 | Transmitter 1202 |

Processor 1203

| Memory 1204 | Application processor 12031 | Communication processor 12032 |

FIG. 12

Computer-readable storage medium 1300

Signal carrying medium 1301

Program instructions 1302

| Computer-readable medium 1303 | Computer-recordable medium 1304 | Communication medium 1305 |

FIG. 13

## INTERNATIONAL SEARCH REPORT

| International application No. |
| --- |
| **PCT/CN2022/128133** |

| A. | CLASSIFICATION OF SUBJECT MATTER |
| --- | --- |

G01S 19/14(2010.01)i

According to International Patent Classification (IPC) or to both national classification and IPC

| B. | FIELDS SEARCHED |
| --- | --- |

Minimum documentation searched (classification system followed by classification symbols)

IPC: G01S

Documentation searched other than minimum documentation to the extent that such documents are included in the fields searched

Electronic data base consulted during the international search (name of data base and, where practicable, search terms used)

CNTXT, ENTXTC, VEN: 三维模型, 渲染, 体素, 像素, 颜色, 球谐, 透明, 删除, 视角, 3D, three w dimension, render+, voxel, pixel, color, view, angle

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 114119838 A (ALIBABA (CHINA) CO., LTD.) 01 March 2022 (2022-03-01) description, paragraphs 55-141 | 1-19 |
| A | CN 114511662 A (BEIJING BAIDU NETCOM SCIENCE AND TECHNOLOGY CO., LTD.) 17 May 2022 (2022-05-17) entire document | 1-19 |
| A | CN 110047152 A (TENCENT TECHNOLOGY (SHENZHEN) CO., LTD.) 23 July 2019 (2019-07-23) entire document | 1-19 |
| A | CN 110602477 A (BOE TECHNOLOGY GROUP CO., LTD. et al.) 20 December 2019 (2019-12-20) entire document | 1-19 |
| A | CN 112138386 A (NETEASE (HANGZHOU) NETWORK CO., LTD.) 29 December 2020 (2020-12-29) entire document | 1-19 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 July 2023** | **24 July 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2022/128133**

**C.    DOCUMENTS CONSIDERED TO BE RELEVANT**

| Category* | Citation of document, with indication, where appropriate, of the relevant passages | Relevant to claim No. |
|---|---|---|
| A | CN 115205463 A (SUN YAT-SEN UNIVERSITY SHENZHEN et al.) 18 October 2022 (2022-10-18)<br>entire document | 1-19 |
| A | US 2003197699 A1 (HEWLETT PACKARD DEVELOPMENT COMPANY) 23 October 2003 (2003-10-23)<br>entire document | 1-19 |
| A | US 6373977 B1 (HEWLETT PACKARD COMPANY) 16 April 2002 (2002-04-16)<br>entire document | 1-19 |

**INTERNATIONAL SEARCH REPORT**
Information on patent family members

International application No.

**PCT/CN2022/128133**

| Patent document cited in search report | | | Publication date (day/month/year) | Patent family member(s) | | | Publication date (day/month/year) |
|---|---|---|---|---|---|---|---|
| CN | 114119838 | A | 01 March 2022 | None | | | |
| CN | 114511662 | A | 17 May 2022 | None | | | |
| CN | 110047152 | A | 23 July 2019 | SG | 11202104841 | TA | 29 June 2021 |
| | | | | EP | 3955214 | A1 | 16 February 2022 |
| | | | | EP | 3955214 | A4 | 11 May 2022 |
| | | | | WO | 2020207146 | A1 | 15 October 2020 |
| | | | | KR | 20210097765 | A | 09 August 2021 |
| | | | | US | 2021283502 | A1 | 16 September 2021 |
| | | | | JP | 2022508162 | A | 19 January 2022 |
| CN | 110602477 | A | 20 December 2019 | None | | | |
| CN | 112138386 | A | 29 December 2020 | None | | | |
| CN | 115205463 | A | 18 October 2022 | None | | | |
| US | 2003197699 | A1 | 23 October 2003 | US | 6930683 | B2 | 16 August 2005 |
| US | 6373977 | B1 | 16 April 2002 | None | | | |

Form PCT/ISA/210 (patent family annex) (July 2022)